(19) Europäisches Patentamt / European Patent Office / Office européen des brevets

(11) **EP 4 686 119 A1**

(12) **EUROPEAN PATENT APPLICATION**
published in accordance with Art. 153(4) EPC

(43) Date of publication:
**28.01.2026 Bulletin 2026/05**

(51) International Patent Classification (IPC):
**H04L 1/00** (2006.01)    **H04L 1/18** (2023.01)
**H04L 1/20** (2006.01)

(21) Application number: **24781001.3**

(52) Cooperative Patent Classification (CPC):
**H04L 1/00; H04L 1/18; H04L 1/20**

(22) Date of filing: **01.02.2024**

(86) International application number:
**PCT/KR2024/001510**

(87) International publication number:
**WO 2024/205006 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.03.2023 KR 20230040461**
**06.04.2023 KR 20230045565**

(71) Applicant: **Samsung Electronics Co., Ltd.**
**Suwon-si, Gyeonggi-do 16677 (KR)**

(72) Inventor: **YOO, Hwasun**
**Suwon-si Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **METHOD AND APPARATUS FOR DETERMINING MCS IN WIRELESS COMMUNICATION SYSTEM**

(57) The present disclosure relates to a 5G or 6G communication system for supporting a higher data transmission rate. A method performed by a base station in a wireless communication system may comprise the operations of: obtaining, from a UE, first channel information indicating a channel state between the base station and the UE; determining a first compensation parameter value on the basis of a first parameter value associated with the channel state, which has been determined on the basis of the first channel information indicating the channel state, and a first offset value for compensation of the first parameter value associated with the channel state; and on the basis of the first compensation parameter value, determining, as a first modulation and coding scheme (MCS) level, an MCS level applied to the UE.

START

OBTAIN, FROM UE, FIRST CHANNEL INFORMATION INDICATING CHANNEL STATE BETWEEN BASE STATION AND UE ~401

DETERMINE FIRST COMPENSATION PARAMETER VALUE BASED ON FIRST PARAMETER VALUE ASSOCIATED WITH CHANNEL STATE, WHICH HAS BEEN DETERMINED BASED ON FIRST CHANNEL INFORMATION, AND FIRST OFFSET VALUE FOR COMPENSATING FIRST PARAMETER VALUE ASSOCIATED WITH CHANNEL STATE ~403

DETERMINE, AS FIRST MCS LEVEL, MCS LEVEL APPLIED TO UE, BASED ON FIRST COMPENSATION PARAMETER VALUE ~405

DETERMINE SECOND OFFSET VALUE FOR COMPENSATING FIRST COMPENSATION PARAMETER VALUE, BASED ON FIRST COMPENSATION PARAMETER VALUE ~407

DETERMINE SECOND COMPENSATION PARAMETER VALUE, BASED ON SECOND PARAMETER VALUE ASSOCIATED WITH CHANNEL STATE, WHICH HAS BEEN DETERMINED BASED ON SECOND CHANNEL INFORMATION INDICATING CHANNEL STATE, AND SECOND OFFSET VALUE ~409

DETERMINE MCS LEVEL APPLIED TO UE, BASED ON SECOND COMPENSATION PARAMETER VALUE ~411

END

**FIG.4**

**Description**

[Technical Field]

The disclosure relates to a wireless communication system (or mobile communication system). Specifically, the disclosure relates to a method and apparatus for determining a modulation and coding scheme (MCS) in a wireless communication system.

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

[Disclosure of Invention]

[Technical Problem]

A base station may identify a result of whether a UE has succeeded in decoding transmitted data based on channel quality indicator (CQI) information received from the UE. The base station may converge, based on identified results, a block error rate (BLER) of the data transmitted by the base station to a target BLER of a predetermined value.

In case that the base station configures a target BLER of a predetermined value for one MCS, there may be a problem in which an MCS level is unnecessarily lowered in a range where a signal-to-interference plus noise ratio (SINR) is relatively low, thereby reducing through-put, or in which the MCS level may not be raised even though a signal may be processed based on a higher MCS level in a range where the SINR is relatively high.

[Solution to Problem]

According to an embodiment, a method performed by a base station in a wireless communication system may include an operations of obtaining, from a UE, first channel information indicating a channel state between the base station and the UE, an operation of determining a first compensation parameter value, based on a first parameter value associated with the channel state, which is determined based on the first channel information indicating the channel state, and a first offset value for compensation of the first parameter value associated with the channel state, an operation of determining, based on the first compensation parameter value a modulation and coding scheme (MCS) level applied to the UE as a first MCS level, an operation of determining a second offset value for compensation of the first compensation parameter value, based on the determined first compensation parameter value, an operation of determining a second compensation parameter value, based on a second parameter value associated with the channel state, which is determined based on second channel information indicating the channel state, and the second offset value, and an operation of determining the MCS level applied to the UE, based on the second compensation parameter.

According to an embodiment, a base station in a wireless communication system may include a transceiver and a controller connected to the transceiver. The controller may be configured to obtain, from a UE, first channel information indicating a channel state between the base station and the UE, determine a first compensation parameter value, based on a first parameter value associated with the channel state, which is determined based on the first channel information indicating the channel state, and a first offset value for compensation of the first parameter value associated with the channel state, determine, based on the first compensation parameter value a modulation and coding scheme (MCS) level applied to the UE as a first MCS level, determine a second offset value for compensation of the first compensation parameter value, based on the determined first compensation parameter value, determine a second compensation parameter value, based on a second parameter value associated with the channel state, which is determined based on second channel information indicating the channel state, and the second offset value, and determine the MCS level applied to the UE, based on the second compensation parameter.

[Advantageous Effects of Invention]

According to an embodiment, an electronic apparatus may reduce or minimize a reduction in throughput due to an MCS level being unnecessarily lowered in a range where a SINR is relatively low as a plurality of target BLERs corresponding to an MCS are configured.

According to an embodiment, the electronic apparatus may minimize or reduce cases where the MCS level may not be increased due to the target BLERs in a range having a relatively high SINR as a plurality of target BLERs corresponding to the MCS are configured.

Various other effects understood directly or indirectly through the disclosure may be provided.

[Brief Description of Drawings]

FIG. 1 illustrates a wireless communication system according to an embodiment of the disclosure.
FIG. 2 illustrates an exemplary structure of a UE according to an embodiment.
FIG. 3 illustrates an exemplary structure of a base station according to an embodiment.
FIG. 4 is a view illustrating a method for determining an MCS based on obtained channel information according to an embodiment.

FIG. 5 is a view illustrating operations between a base station and a UE for determining an MCS according to an embodiment.

FIG. 6 is a view illustrating a method of an MCS determination module operating in a base station to determine an offset according to an embodiment.

FIG. 7 is a view illustrating a method of a base station to identify change values and offsets based on a fractional MCS according to an embodiment.

FIG. 8 is a view illustrating a method for determining a second offset value according to an embodiment.

FIG. 9 is a view illustrating target BLERs for each MCS according to a parameter associated with a channel state according to an embodiment.

FIG. 10 is a view illustrating a throughput according to a SINR for each MCS level according to an embodiment.

FIG. 11 is a view illustrating a relative throughput according to a compensation parameter value for each MCS level in designated ranges according to an embodiment.

FIG. 12 is a view illustrating a relative throughput according to a compensation parameter value for each MCS level in designated ranges according to an embodiment.

FIG. 13 is a view illustrating a relative throughput according to a compensation parameter value for each MCS level in designated ranges according to an embodiment.

FIG. 14 is a view illustrating a feature of a base station receiving a report on CSI-RS from a UE according to an embodiment.

FIG. 15 is a view illustrating a modulation order, target code rate, and MPR according to an MCS level according to an embodiment.

With regard to the description of the drawings, the same or like reference signs may be used to designate the same or like elements.

[Mode for the Invention]

Hereinafter, various embodiments of the disclosure will be described with reference to the accompanying drawings. However, it should be appreciated that they are not intended to limit the disclosure to particular embodiments and the disclosure includes various modifications, equivalents, and/or alternatives for embodiments of the disclosure.

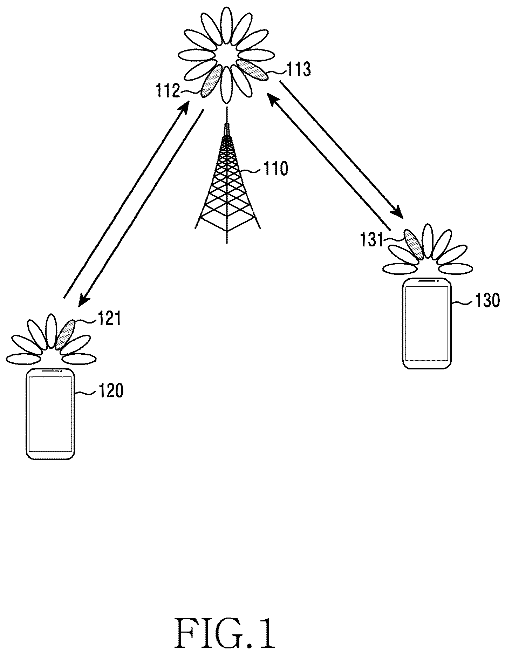

FIG. 1 illustrates a wireless communication system according to an embodiment of the disclosure.

FIG. 1 illustrates a base station 110, a first UE 120, and/or a second UE 130, as some of nodes using a radio channel in the wireless communication system. FIG. 1 illustrates only one base station, but this is merely an example. Other base stations identical or similar to the base station 110 may be further included in the wireless communication system of FIG. 1.

The base station 110 is a network infrastructure which provides radio access to the UEs 120 and 130. The base station 110 has coverage defined as a certain geographical area, based on a distance over which the base station 110 can transmit signals. In addition to the term "base station", the base station 110 may be referred to as an "access point (AP)", an "eNodeB (eNB)", a "gNodeB (gNB)", a "5th generation node (5G node)", a "wireless point", a "transmission/reception point (TRP)", or other terms having technical meanings equivalent thereto.

Each of the first UE 120 and the second UE 130 is a device used by a user, and may perform communication with the base station 110 via a radio channel. At least one of the UE 120 and the UE 130 may be operated without the user's involvement. For example, at least one of the first UE 120 and the second UE 130 may be a device which performs machine type communication (MTC), and may not be carried by the user. In addition to the term "terminal", each of the first UE 120 and the second UE 130 may be referred to as a "user equipment (UE)", a "mobile station", a "subscriber station", a "customer-premises equipment (CPE)", a "remote terminal", a "wireless terminal", an "electronic device", a "user device", or other terms having technical meanings equivalent thereto.

The base station 110, the first UE 120, and the second UE 130 may transmit and/or receive wireless signals in millimeter wave (mmWave) bands (e.g., 28GHz, 30GHz, 38GHz, and 60GHz). In this case, in order to improve channel gain, the base station 110, the first UE 120, and the second UE 130 may perform beamforming.

The beamforming may include transmission beamforming and/or reception beamforming. That is, the base station 110, the first UE 120, and the second UE 130 may assign directivity to a transmission signal or a reception signal. To assign directivity to a transmission signal, the base station 110 and/or the UEs 120 and 130 may select serving beams 112, 113, 121, and 131 through a beam search or beam management procedure. After the serving beams 112, 113, 121, and 131 are selected, subsequent communication may be performed through a resource having a quasi co-located (QCL) relationship with a resource in which the serving beams 112, 113, 121, and 131 have been transmitted.

Each of the base station 110, the first UE 120, and the second UE 130 of the disclosure may be a transmitting apparatus, a transmitting node, a receiving node, a receiving apparatus, and/or a receiving node. For example, the base station 110 may transmit a radio frequency (RF) signal to the first UE 120. The base station 110 may receive an RF signal from the first UE 120. As another example, the first UE 120 may transmit an RF signal to the base station 110 or the second UE 130. The first UE 120 may receive an RF signal from the base station 110 or the second UE 130.

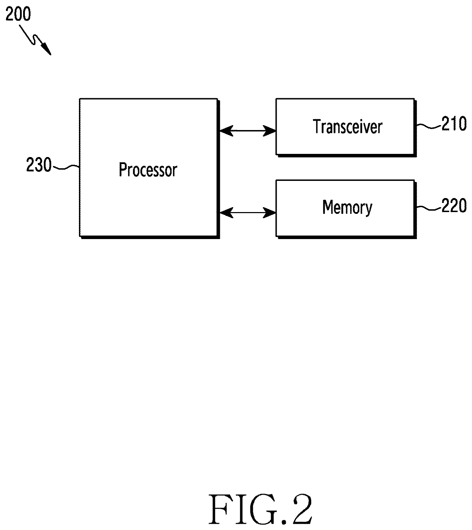

FIG. 2 illustrates a structure of a UE according to an embodiment.

Referring to FIG. 2, the UE 200 according to an embodiment may include a transceiver 210, a memory 220, and/or a processor (or controller) 230. Although the UE 200 is described herein as including the transceiver 210, the memory 220, and/or the processor 230, this is merely an example. For example, the UE 200 may further include components other than the transceiver 210, the memory 220, and the processor 230.

According to an embodiment, each of the transceiver 210, the memory 220, and the processor 230 may be implemented as a separate chip. However, this is merely an example, and the transceiver 210, the memory 220, and/or the processor 230 may be implemented as a single chip.

According to an embodiment, the transceiver 210 may include at least one transmitter and/or at least one receiver. For example, the transceiver 210 may include an RF transmitter for amplifying and up-converting the frequency of a transmitted signal. The transceiver 210 may include an RF receiver for downconverting and low-noise amplifying the frequency of a received signal.

The components of the transceiver 210 set forth herein are merely an example, and the components of the transceiver 210 are not limited to the RF transmitter and the RF receiver. For example, the transceiver 210 may further include a coupler for ensuring isolation between the RF transmitter and the RF receiver.

According to an embodiment, the transceiver 210 may transmit or receive a signal to or from the processor 230. For example, the transceiver 210 may transmit or deliver an RF signal, received via a radio channel, to the processor 230. The transceiver 210 may receive an RF signal from the processor 230 or the processor 230 may deliver an RF signal to the transceiver 210.

According to an embodiment, the transceiver 210 may be referred to as a "UE transmitter" or a "UE receiver".

According to an embodiment, the transceiver 210 may transmit a signal to a base station (e.g., the base station 110 in FIG. 1) or a network entity (e.g., user plane function (UPF) entity) or receive a signal from the base station or the network entity. In an embodiment, the transmitted or received signal may include a control signal or data.

According to an embodiment, the memory 220 may store programs and data necessary for the operations of the UE 200. For example, the memory 220 may be a non-transitory memory, and programs stored in the non-transitory memory may be organically coupled to hardware components (e.g., the processor 230 or the transceiver 210) of the UE 200. The memory 220 may store control information or data including a signal acquired by the UE 200. In an embodiment, the memory 220 may include a read-only memory (ROM), a random access memory (RAM), a hard disk, a CD-ROM, a DVD, or storage media.

According to an embodiment, the processor 230 may include one processor or multiple processors. For example, the processor 230 may include a communication processor. For example, the processor 230 may include a communication processor and/or an application processor.

According to an embodiment, the processor 230 may control a series of processes performed by the UE 200. For example, the transceiver 210 may receive a data signal including control information transmitted by the base station or the network entity. The processor 230 may process the received control signal and data signal.

The term "processor" of the disclosure may be replaced with various terms referring to components for executing or performing the operations of the UE 200. For example, the processor may be replaced with the term "controller" or "computing circuit".

The UE 200 of the disclosure may correspond to the first UE 120 and/or the second UE 130 in FIG. 1.

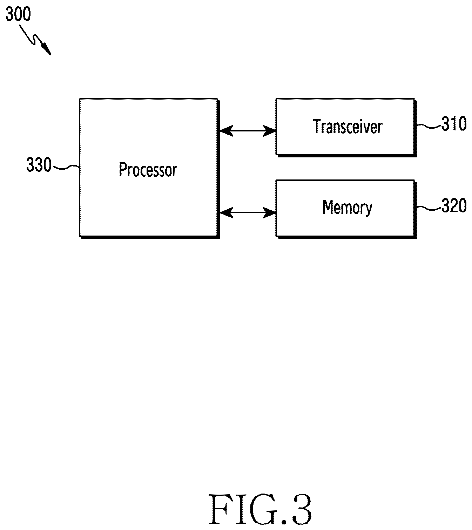

FIG. 3 illustrates a structure of a base station according to an embodiment.

Referring to FIG. 3, the base station 300 according to an embodiment may include a transceiver 310, a memory 320, and/or a processor (or controller) 330. Although the base station 300 is described herein as including the transceiver 310, the memory 320, and/or the processor 330, this is merely an example. For example, the base station 300 may further include components other than the transceiver 310, the memory 320, and the processor 330.

According to an embodiment, each of the transceiver 310, the memory 320, and the processor 330 may be implemented as a separate chip. However, this is merely an example, and the transceiver 310, the memory 320, and/or the processor 330 may be implemented as a single chip.

According to an embodiment, the transceiver 310 may include at least one transmitter and/or at least one receiver. For example, the transceiver 310 may include an RF transmitter for amplifying and up-converting the frequency of a transmitted signal. The transceiver 310 may include an RF receiver for downconverting and low-noise amplifying the frequency of a received signal.

The components of the transceiver 310 set forth herein are merely an example, and the components of the transceiver 310 are not limited to the RF transmitter and the RF receiver. For example, the transceiver 310 may further include a coupler for ensuring isolation between the RF transmitter and the RF receiver.

According to an embodiment, the transceiver 310 may transmit or receive a signal to or from the processor 330.

For example, the transceiver 310 may transmit or deliver an RF signal, received via a radio channel, to the processor 330. The transceiver 310 may receive an RF signal from the processor 330 or the processor 330 may deliver an RF signal to the transceiver 310.

According to an embodiment, the transceiver 310 may be referred to as a "base station transmitter" or a "base station receiver".

According to an embodiment, the transceiver 310 may transmit a signal to the UE 200 or receive a signal from the UE 200. In an embodiment, the transmitted or received signal may include a control signal or data.

According to an embodiment, the memory 320 may store programs and data necessary for the operations of the base station 300. For example, the memory 320 may be a non-transitory memory, and programs stored in the non-transitory memory may be organically coupled to hardware components (e.g., the processor 330 or the transceiver 310) of the base station 300. The memory 320 may store control information or data including a signal acquired by the base station 300. In an embodiment, the memory 320 may include a read-only memory (ROM), a random access memory (RAM), a hard disk, a CD-ROM, a DVD, or storage media.

According to an embodiment, the processor 330 may include one processor or multiple processors. For example, the processor 330 may include a communication processor. For example, the processor 330 may include a communication processor and/or an application processor.

According to an embodiment, the processor 330 may control a series of processes performed by the base station 300. For example, the transceiver 310 may receive a data signal including control information transmitted by the base station or the network entity. The processor 330 may process the received control signal and data signal.

The term "processor" of the disclosure may be replaced with various terms referring to components for executing or performing the operations of the base station 300. For example, the processor may be replaced with the term "controller" or "computing circuit".

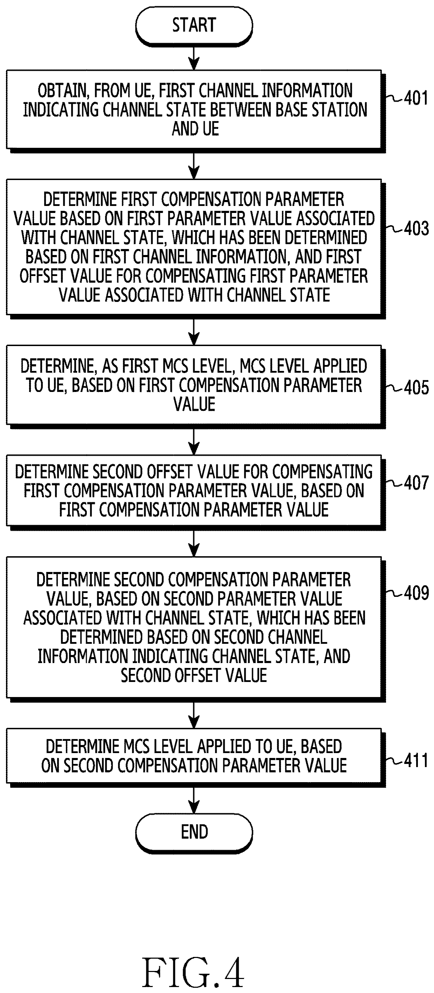

FIG. 4 is a view illustrating a method for determining an MCS based on obtained channel information according to an embodiment.

Referring to FIG. 4, in operation 401, the base station 300 according to an embodiment may obtain first channel information indicating a channel state between the base station 300 and the UE 200 from the UE 200. For example, first channel information indicating a channel state may include at least one of channel quality indicator (CQI) information, precoding matrix indicator (PMI) information, or synchronization signal block resource indicator (SSBRI) information.

According to an embodiment, the channel state between the base station 300 and the UE 200 indicated by the first channel information may be substantially a channel state estimated by the UE 200. For example, the base station 300 may transmit at least one reference signal (RS) (e.g., a channel state information (CSI) RS) to the UE 200. The UE 200 may estimate the channel state (e.g., downlink channel state) between the UE 200 and the base station 300 based on the received at least one RS, and may transmit channel information on the estimated channel state to the base station 300. In an embodiment, the channel information on the channel state may be transmitted to the base station 300 as uplink control information (UCI). For another example, the base station 300 may identify a state of an uplink communication channel based on at least one sounding reference signal (SRS) transmitted by the UE 200, and estimate or identify a state of a downlink communication channel based on a reciprocity relationship between the uplink communication channel and the downlink communication channel.

For another example, the base station 300 may transmit at least one synchronization signal to the UE 200, and the UE 200 may estimate a channel state between the UE 200 and the base station 300 based on the received at least one synchronization signal, and transmit channel information about the estimated channel state to the base station 300. In an embodiment, the at least one synchronization signal may include a primary synchronization signal (PSS) and/or a secondary synchronization signal (SSS).

According to an embodiment, the base station 300 may determine a first compensation parameter value based on a first parameter value (e.g., a SINR, a SNR, or a fractional MCS) associated with a channel state determined based on the first channel information (e.g., a CQI) in operation 403 and a first offset value for compensation of the first parameter value associated with the channel state. For example, the base station 300 may identify the first parameter value (e.g., a SINR, a SNR, or a fractional MCS) mapped with the first channel information (e.g., CQI_1) received from the UE 200. The base station 300 may determine or identify the first compensation parameter value (e.g., SINR_C1) by adding the first parameter value (e.g., SINR_1) and the first offset value (e.g., offset_1).

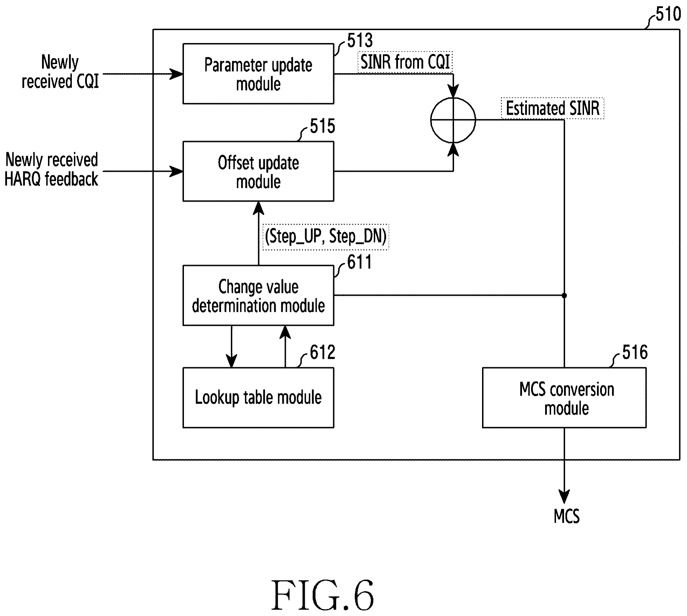

A process by which the base station 300 determines or identifies the first parameter value (e.g., SINR_1) and the first compensation parameter value (e.g., SINR_C1) based on the first channel information (or, a value associated with the first channel information) (e.g., CQI_1) will described in detail below in FIG. 6. For example, a process by which the first parameter value (e.g., SINR_1) and the first compensation parameter value (e.g., SINR_C1) are determined based on the first channel information (e.g., CQI_1) may be determined based on [Equation 2] or [Equation 3] of FIG. 6.

According to an embodiment, the first offset value (e.g., offset_1) may be a value preconfigured for the base station 300. For example, in case that the first offset value is an initial offset value, the base station 300 may determine the first offset value based on an initial BLER configured for the base station 300.

For another example, in case that the first offset value (e.g., offset_1) is not the initial offset value, the first offset value may be determined based on a previously determined compensated parameter (e.g., a SINR or fractional MCS). For another example, the first offset value may be determined based on a previously determined MCS.

A process in which the base station 300 determines the first offset value will be described in detail below in FIG. 6. For example, the first offset value may be determined based on [Equation 4] and [Equation 5] of FIG. 6.

According to an embodiment, the initial offset value may be referenced as an offset value initially configured to the base station to substantially determine the MCS. For example, the initial offset value may be referenced as an offset value configured to the base station 300 before the base station 300 receives channel information indicating a channel state from the UE 200.

According to an embodiment, in operation 405, the base station 300 may determine the MCS level to be applied to the UE 200 as a first MCS level based on the first compensation parameter value. For example, the MCS to be applied to the UE 200 may include binary phase shift keying (BPSK), quadrature phase shift keying (QPSK), quadrature amplitude modulation (16-QAM), 64-QAM, and/or 256-QAM. For example, the base station 300 may determine the MCS level to be applied to the UE 200 as a relatively higher level as the first compensation parameter value (e.g., a SINR, a SNR, or a fractional MCS) is higher. For example, the MCS level may be indicated or represented by an MCS index.

According to an embodiment, the base station 300 may determine the MCS level to be applied to the UE 200 based on a look-up table including the MCS level mapped to the first compensation parameter value (e.g., the SINR, the SNR, or the fractional MCS). For example, the look-up table including the MCS level mapped to the first compensation parameter value may be stored in the memory 320 of the base station 300. The base station 300 may determine the MCS level corresponding to (or mapped to) the determined first compensation parameter value using the look-up table.

According to an embodiment, in operation 407, the base station 300 may determine a second offset value (e.g., offset_2) for compensating for the first compensation parameter value based on the first compensation parameter. For example, the base station 300 may identify change values (e.g., Step_UP, and Step_DN) corresponding to the first compensation parameter. The base station 300 may determine the second offset value based on the change values and information on hybrid automatic repeat and request (HARQ) received from the UE 200.

For another example, the base station 300 may identify change values (e.g., Step_UP, and Step_DN) corresponding to the first MCS level. The base station 300 may determine the second offset based on the change values and information on HARQ received from the UE 200.

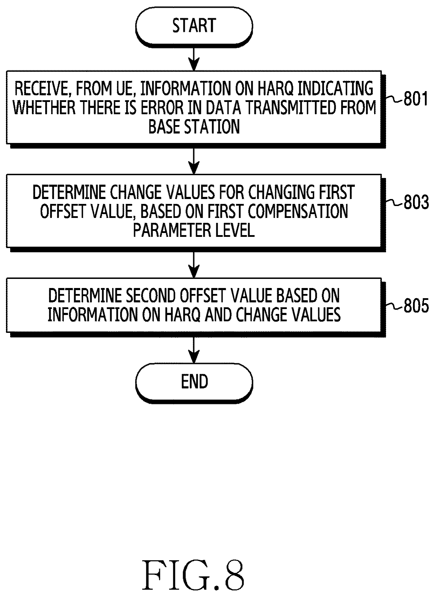

The method for determining the second offset value based on the change values and information on HARQ will be described in detail below in FIG. 8.

According to an embodiment, in operation 409, the base station 300 may determine a second compensation parameter based on a second parameter and a second offset value associated with the channel state determined based on second channel information indicating the channel state. For example, the base station 300 may obtain or receive, from the UE 200, the second channel information (e.g., CQI_2) indicating the channel state between the UE 200 and the base station 300. The base station 300 may identify or estimate a second parameter value (e.g., a SINR, a SNR, or a fractional MCS) associated with the channel state based on the second channel information (or, a value associated with the second channel information) (e.g., CQI_2). The base station 300 may identify or estimate the second compensation parameter value (e.g., SINR_C2) by adding the second parameter value (e.g., SINR_2) associated with the channel state and the second offset value (e.g., offset_2).

For example, the second channel information may be received from the UE 200 at a second time point that is after a first time point at which the first channel information is received.

According to an embodiment, in operation 411, the base station 300 may determine the MCS level to be applied to the UE 200 based on the second compensation parameter value. For example, the base station 300 may change the MCS level from the first MCS level to a second MCS level based on the second compensation parameter value. For example, the base station 300 may change the MCS level from the first MCS level to a third MCS level based on the second compensation parameter value. For example, the base station 300 may maintain the MCS level at the first MCS level based on the second compensation parameter value.

According to an embodiment, the second MCS level may be a lower level than the first MCS level, and the third MCS level may be a higher level than the first MCS level. For example, a through-put in the case that the base station 300 transmits data based on the first MCS level may be lower than that in the case that the base station transmits data based on the second MCS level.

According to an embodiment, the base station 300 may transmit data to the UE 200 based on the determined MCS level. For example, in case that the MCS level applied to the UE 200 is determined to be the first MCS level (e.g., 64-QAM), the base station 300 may transmit data to the UE 200 based on the first MCS level.

According to an embodiment, the first compensation parameter value may be a parameter value for determining or identifying an MCS (or MCS level) allocated or applied to the UE 200.

FIG. 4 of the disclosure illustrates that the base station 300 obtains or identifies the first compensation parameter and the second compensation parameter through operations 401 to 411, and determines an MCS corresponding to each of the first compensation parameter and the second compensation parameter. Although omitted in FIG. 4, the base station 300 may obtain or identify a third compensation parameter in the same manner as described in operations 407 to 411, and the base station 300 may determine an MCS level based on the third compensation parameter.

The compensation parameter of the disclosure may be referred to as a parameter (e.g., a SINR, a SNR, a fractional MCS) for determining an MCS applied or allocated to the UE 200. Accordingly, the compensation parameter may be replaced with the term final parameter for determining an MCS, a parameter for determining an MCS, or an estimated parameter.

Although the operations are described as being performed by the base station 300 in FIG. 4 of the disclosure, this is merely an example for convenience of explanation. The operations described in FIG. 4 may actually be performed by at least one processor and/or controller of the base station 300.

In FIG. 4 of the present disclosure, the method in which the base station 300 determines the MCS to be allocated or applied to the UE 200 to transmit downlink (DL) data to the UE 200 has been described. However, this is only an example, and an entity performing the operations of FIG. 4 of the disclosure may be a transmitting end, a transmitting node, and/or a transmitting apparatus.

Similarly, although operations of the base station 300 for transmitting DL data are described in FIG. 4, this is only an example, and the operations may also be understood as operations for the UE 200 to transmit uplink (UL) data to the base station 300. For example, the UE 200 may transmit a sounding reference signal (SRS) signal to the base station 300, and the base station 300 may estimate a channel state between the UE 200 and the base station 300 based on the SRS signal. The UE 200 may obtain first channel information indicating the channel state from the base station 300, and may determine a first compensation parameter value based on a first parameter value associated with the channel state based on the first channel information and a first offset value for compensating for the first parameter value associated with the channel state. The UE 200 may determine an MCS level applied to communication with the base station 300 as a first MCS level based on the first compensation parameter value. The UE 200 may determine a second offset value for compensating for the first compensation parameter value based on the first MCS level. The UE 200 may determine a second compensation parameter value based on a second offset value and a second parameter value associated with the channel state determined based on second channel information indicating the channel state. The UE 200 may determine the MCS level to be applied to the UE 200 based on the second compensation parameter value.

It is obvious to those skilled in the art that the descriptions of FIGS. 1 to 15 may be applied to the operations of the UE 200 described above, unless they are contradictory.

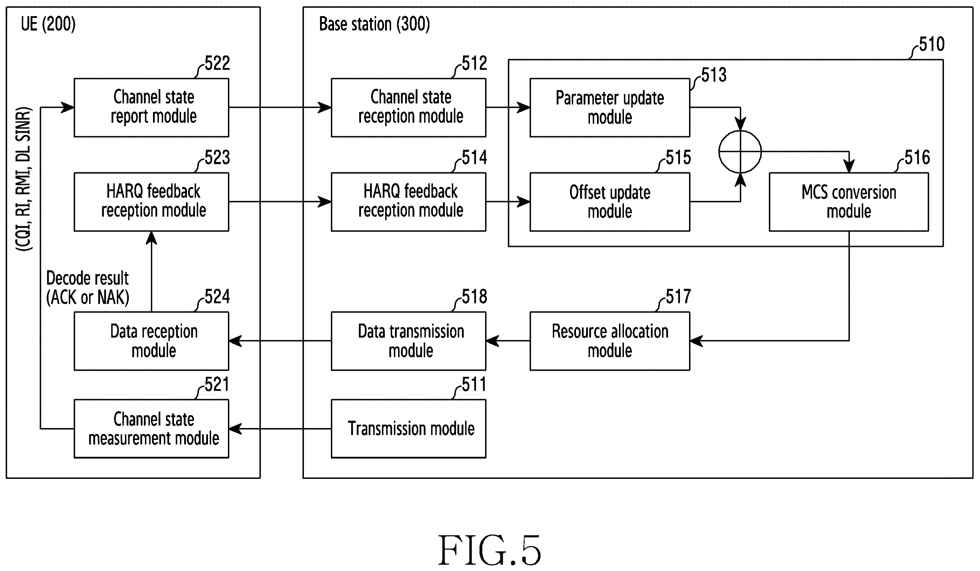

FIG. 5 is a view illustrating operations between a base station and a UE for determining an MCS according to an embodiment.

Referring to FIG. 5, a transmission module 511 of the base station 300 according to an embodiment may transmit at least one RS signal to the UE 200. For example, the transmission module 511 of the base station 300 may be configured to transmit at least one CSI-RS to the UE 200. The term transmission module 511 may be replaced with a CSI-RS transmitter.

According to an embodiment, a channel state measurement module 521 of the UE 200 may estimate or measure a channel state between the UE 200 and the base station 300 based on at least one RS signal received from the base station 300. The term channel state measurement module 521 may be replaced with a CSI quality measurement module.

According to an embodiment, the channel state measurement module 521 may transmit information indicating a channel state to a channel state report module 522 of the UE 200. For example, the information indicating the channel state may include CQI information, rank index (RI) information, and/or downlink (DL) SINR information. The channel state report module 522 may be replaced with a CSI report transmitter.

According to an embodiment, the channel state report module 522 of the UE 200 may transmit information indicating the channel state to a channel state reception module 512 of the base station 300. For example, the channel state report module 522 may transmit a CSI report to the channel state reception module 512. The channel state reception module 512 may be replaced with a CSI report receiver.

According to an embodiment, a parameter update module 513 of the base station 300 may update a parameter based on information indicating a channel state received from the channel state reception module 512. For example, the parameter may be a parameter (e.g., a SINR, a SNR, or a fractional MCS) associated with the received channel state. The term parameter update module 513 may be replaced with a downlink SINR update module.

According to an embodiment, a HARQ feedback transmission module 523 of the UE 200 may transmit information on HARQ, which indicates whether data transmitted from the base station 300 were transmitted successfully or without error, to a HARQ feedback reception module 514 of the base station 300. For example, the information on HARQ may include information on the number of acknowledges (ACKs) and negative acknowledges (NACKs), respectively. For example, whether the transmitted data were transmitted successfully or without error may be substantially referred to as a case where the UE 200 receives data greater than a designat4ed ratio of data transmitted from the base station 300.

According to an embodiment, the offset update module 515 of the base station 300 may receive information on HARQ from the HARQ feedback reception module 514. In an embodiment, the offset update module 515 may update the offset value based on information on the number of each of ACKs and NACKs included in the information on the HARQ. For example, the offset value updated by the offset update module 515 may be a value for compensating for a parameter (e.g., a SINR) output from the parameter update module 513. For example, the term offset update module 515 may be replaced with an outer loop link adaptation (OLLA) offset update module.

According to an embodiment, an MCS conversion module 516 of the base station 300 may identify a compensated parameter value based on the parameter value (e.g., the SINR) output from the parameter update module 513 and the offset value output from the offset update module 515, and convert the compensated parameter value into an MCS level. The term MCS conversion module 516 may be replaced with a SINR-to-MCS conversion module.

According to an embodiment, a resource allocation module 517 of the base station 300 may allocate resources for downlink data based on the MCS level output from the MCS conversion module 516. For example, the resources may correspond to wireless communication resources and may be defined by a frequency domain and a time domain. For example, the resource allocation module 517 of the base station 300 may schedule at least one resource for a physical downlink shared channel (PDSCH) based on the MCS level.

According to an embodiment, a data transmission module 518 of the base station 300 may transmit data to the UE 200 using a resource allocated by the resource allocation module 517. A data reception module 524 of the UE 200 may receive data from the data transmission module 518 of the base station 300 and perform error check on the received data. The data reception module 524 may transmit an ACK and/or NACK as a result of performing the error check to the HARQ feedback transmission module 523.

In FIG. 5 of the disclosure, it is described that software modules (e.g., the channel state report module 522) driven or operating within the UE 200 perform operations, but this is only an example. For example, the operations of software modules driven within the UE 200 may be performed by a controller included in the UE 200.

In FIG. 5 of the disclosure, it is described that software modules (e.g., the channel state reception module 512) driven or operating within the base station 300 perform operations, but this is only an example. For example, the operations of software modules driven within the base station 300 may be performed by a controller included in the base station 300.

An MCS determination module 510 may include the parameter update module 513, the offset update module 515, and/or the MCS conversion module 516. The term MCS determination module 510 may be replaced with an outer loop adaption block.

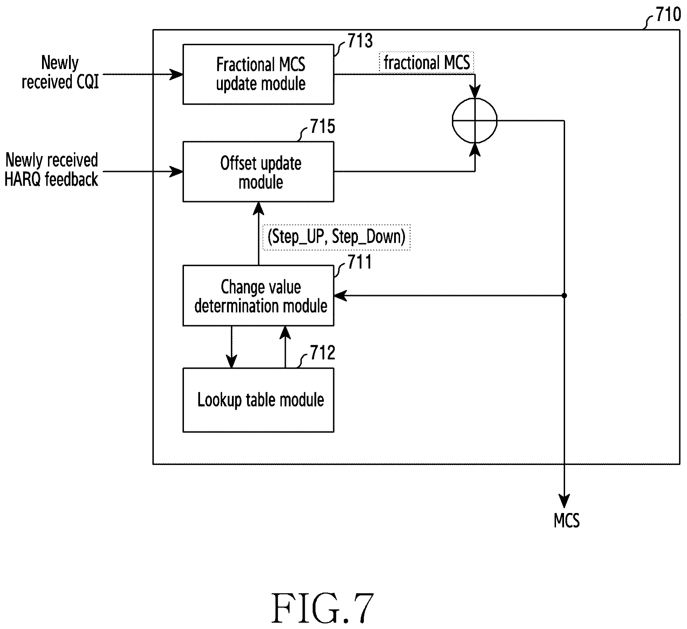

Hereinafter, in FIGS. 6 and 7, a method for determining an MCS to be applied to the UE 200 by using the offset update module 515, the parameter update module 513, and the MCS conversion module 516 included in the MCS determination module 510 by the base station 300 will be described.

FIG. 6 is a view illustrating a method of an MCS determination module operating in a base station to determine an offset according to an embodiment.

Referring to FIG. 6, an MCS determination module 510 operating in the base station 300 according to an embodiment may include a parameter update module 513, an offset update module 515, a change value determination module 611, a look-up table module 612, and/or an MCS conversion module 516.

According to an embodiment, the parameter update module 513 may update parameter values (e.g., a SINR or a SNR) associated with a channel state whenever the parameter update module receives information (e.g., a CQI) on a channel state from the UE 200.

According to an embodiment, the offset update module 515 may update the offset value whenever the offset update module receives information (or HARQ feedback) on HARQ from the UE 200. For example, the offset value may be added to a parameter output from the parameter update module 513, and a compensation parameter value (or estimated SINR) may be output.

According to an embodiment, the MCS conversion module 516 may output an MCS level corresponding to the output compensation parameter value. For example, the MCS level output from the MCS conversion module 516 may be allocated or applied by the base station 300 to the UE 200 and may be utilized when the base station 300 transmits data to the UE 200.

According to an embodiment, the change value determination module 611 may determine or identify change values for changing the offset value. For example, the change value determination module 611 may determine or identify change values for changing the offset value based on the output compensation parameter value. For example, the change values may include a decrease value (e.g., Step_DN) for decreasing the offset value (e.g., the first offset value (offset_1)) and/or an increase value (e.g., Step_UP) for increasing the offset value.

For example, the change values for changing the offset value may be represented as a ratio. That is, the change values for changing the offset value may be represented as a ratio of the increasing value to the decreasing value.

According to an embodiment, the change value determination module 611 may determine the change values based on whether there is information (e.g., CQI) on a channel state and/or information on HARQ received from the UE 200 by the base station 300.

According to an embodiment, the change value determination module 611 may determine the change values based on a target BLER (e.g., 10) configured to the base station 300 when there is no information on the channel state received by the base station 300 from the UE 200 and/or information on the HARQ. [Equation 1] is a relationship between the target BLER and the change values (e.g., Step_UP and Step_DN). The change value determination module 611 may identify the ratio of the change values using [Equation 1] based on the configured BLER.

$$[\text{Equation 1}]$$
$$\text{Step\_UP} * (1 - \text{BLER}_{\text{target}}) = \text{Step\_DN} * \text{BLER}_{\text{target}}$$

According to an embodiment, the change value determination module 611 may identify change values (e.g., Step_UP and Step_DN) corresponding to (or mapped to) a determined compensation parameter value when there is information on a channel state and/or information on HARQ received from the UE 200 by the base station 300.

For example, in case that the base station 300 receives information (e.g., CQI_initial) on a channel state from the UE 200 at an initial time point, the base station 300 may identify an initial parameter value (e.g., SINR_initial) corresponding to the information (e.g., CQI_initial) on the channel state. The base station 300 may identify an initial compensation parameter value by adding an initial offset value determined by the offset update module 515 and the initial parameter value. In an embodiment, the initial time point may be referred to as a time point when the base station 300 first receives information on a channel state from the UE 200.

In an embodiment, the change value determination module 611 may identify change values (e.g., Step_UP and Step_DN) corresponding to an initial compensation parameter value (e.g., SINR_C_initial). A look-up table of change values mapped to compensation parameter values may be stored in the memory 320 of the base station 300, and the change value determination module 611 may identify change values corresponding to the initial compensation parameter value using the look-up table.

For another example, in case that information (e.g., CQI_1) on a channel state is received from the UE 200 at a first time point after the initial time point, the base station 300 may identify a new parameter value (e.g., SINR_new) corresponding to the information (e.g., CQI_1) on the channel state. The base station 300 may identify a first parameter value (e.g., SINR_1) at the first time point based on [Equation 2].

In [Equation 2], alpha may correspond to a weight (or, forgetting factor). For example, in case that alpha is 0, the first parameter value (e.g., SINR_1) corresponding to the first time point may be identical to the new parameter value (e.g., SINR_new) newly received by the base station 300. That is, in case that alpha is 0, the base station 300 may configure the first parameter value (e.g., SINR_1) using only the new parameter value (e.g., SINR_new).

$$[\text{Equation 2}]$$
$$\text{SINR\_1} = \text{alpha} * \text{SINR\_initial} + (1 - \text{alpha}) * \text{SINR-new}$$

The base station 300 may identify a first compensation parameter value (e.g., SINR_C1) by adding the first parameter value (e.g., SINR_1) and the first offset value corresponding to the first time point. The MCS conversion module 516 of the base station 300 may determine an MCS level based on the first compensation parameter value (e.g., SINR_C1). The change value determination module 611 may determine change values for determining the first offset value based on the first compensation parameter value (e.g., SINR_C1).

Accordingly, the first parameter value associated with the channel state may be determined based on the product of the initial parameter value and the weight (e.g., alpha). Similarly, the second parameter value associated with the channel state may be determined based on the product of the first parameter value and the weight (e.g., alpha).

For another example, the first parameter value associated with the channel state may be determined based on the product of the initial parameter value and the first weight (e.g., alpha), and the new parameter value and the second weight (e.g., 1-alpha). Similarly, the second parameter value associated with the channel state may be determined based on the product of the first parameter value and the first weight (e.g., alpha), and the new parameter value and the second weight (e.g., 2-alpha).

For reference, [Equation 2] may be generalized to [Equation 3] using time t and time t-1. SINR_new may correspond to the SINR corresponding to the channel information (e.g., a CQI) received at time t.

$$[\text{Equation 3}]$$
$$\text{SINR\_t} = \text{alpha} * \text{SINR\_(t} - 1) + (1 - \text{alpha}) * \text{SINR\_new}$$

According to an embodiment, the offset update module 515 may determine or identify an offset value based on the change values determined by the change value determination module 611 and information on the HARQ received from the UE 200.

For example, the offset update module 515 may increase a new offset value (offset_new) by a first change value (e.g., Step_UP) in case that the information on the HARQ received from the UE 200 includes an ACK. The offset update module 515 may decrease the new offset value (offset_new) by a second change value (e.g., Step_DN) in case that the information on the HARQ received from the UE 200 includes a NACK.

According to an embodiment, the information for the HARQ may include at least one ACK and/or at least one NACK, and the offset update module 515 may determine a new offset value (offset new) based on [Equation 4].

$$[\text{Equation 4}]$$
$$\text{Offset}_{new} = a * \text{Step\_UP} + b * \text{Step\_DN}$$

In [Equation 4], "a" may be the number of ACKs included in information on HARQ, and "b" may be the number of NACKs included in information on HARQ.

According to an embodiment, the offset update module 515 may obtain or identify the offset value at a designated time point based on the new offset value (offset_new). For example, the offset update module 515 may identify the offset value (offset_t) at time point t based on the offset value (offset_t-1) at time point t-1 and the new offset value (offset_new) corresponding to time point t. [Equation 5] is a relationship between the offset value at time point t-1 and the offset value at time point t. In [Equation 5], alpha may correspond to a weight value.

$$[\text{Equation 5}]$$
$$\text{Offset} = alpha * \text{offse}_{t-1} + (1 - alpha) * \text{offset\_new}$$

According to an embodiment, the base station 300 may adjust the weight of the offset value (offset_t-1) at time t-1 and the new offset value (offset_new) newly identified at time t by adjusting alpha corresponding to the weight value. For example, the offset value (offset_t-1) at time t-1 may correspond to a value obtained by accumulating offset values from the initial time to time t-1.

In an embodiment, the look-up table module 612 may be referenced as a module that stores or reads a look-up table including MCS levels mapped to parameters (e.g., a SNR and a SNIR) associated with channel states. In an embodiment, the change value determination module 611 may read a look-up table including MCS levels mapped to parameters associated with channel states by using the look-up table module 612.

In the disclosure, it is described that the MCS determination module 510 of the base station 300 includes the look-up table module 612, but this is only an example. For example, the look-up table module 612 may be omitted and the change value determination module 611 may store or read a look-up table including MCS levels mapped to parameters associated with channel states.

In FIG. 6 of the disclosure, it is described that modules perform operations, but this is merely an example. For example, the operations performed by the modules of FIG. 6 may be performed by at least one processor and/or controller included in the base station 300.

FIG. 7 is a view illustrating a method of a base station to identify change values and offsets based on a fractional MCS according to an embodiment.

Referring to FIG. 7, an MCS determination module 710 operating in the base station 300 according to an embodiment may include a fractional MCS update module 713, an offset update module 715, a change value determination module 711, and/or a look-up table module 712.

Unlike the parameter update module 513 in FIG. 6, the fractional MCS update module 713 of FIG. 7 may determine a fractional MCS based on channel information (e.g., a CQI) received from the UE 200. For example, the fractional MCS may be referenced as an MCS expressed in a real number (e.g., 7.2 or 8.5).

According to an embodiment, the fractional MCS update module 713 may update the fractional MCS whenever information (e.g., a CQI) on channel states is received from the UE 200.

According to an embodiment, the offset update module 515 may update the offset value whenever the offset update module receives information (or HARQ feedback) on HARQ from the UE 200. For example, an offset value output from the offset update module 515 may be added to the fractional MCS value output from the fractional MCS update module 713, and a compensation fractional MCS value may be output.

Unlike the MCS determination module 510 in FIG. 6, the MCS determination module 710 in FIG. 7 may not include the MCS conversion module 516. For example, a compensation fractional MCS value corresponding to the sum of the fractional MCS value and the offset value may correspond to the MCS applied to the UE 200.

According to an embodiment, the change value determination module 711 may determine or identify change values for changing the offset value. For example, the change value determination module 711 may determine or identify change values (e.g., Step_UP and Step_DN) for changing the offset value based on the compensation fractional MCS value.

For example, the change values may include a decrease value (e.g., Step_DN) for decreasing the offset value and/or an increase value (e.g., Step_UP) for increasing the offset value.

According to an embodiment, the change value determination module 711 may determine the change values based on whether there is information (e.g., CQI) on a channel state and/or information on HARQ received from the UE 200 by the base station 300.

According to an embodiment, the change value determination module 611 may determine the change values based on a target BLER configured to the base station 300 in case that there is no information on the channel state received by the base station 300 from the UE 200 and/or information on the HARQ. For example, the base station 300 may identify a ratio of the change values by using [Equation 6].

$$[\text{Equation 6}]$$
$$\text{Step\_UP} * (1 - \text{BLER}_{target}) = \text{Step\_DN} * \text{BLER}_{target}$$

According to an embodiment, the change value determination module 711 may identify change values Step_UP and Step_DN) corresponding to a determined compensation parameter value in case that there is information on channel states and/or information on HARQ received from the UE 200 by the base station 300.

For example, in case that the base station 300 receives information (e.g., CQI_initial) on a channel state from the UE 200 at an initial time point, the base station 300 may identify an initial fractional MCS value (e.g., Fractional MCS_initial) corresponding to the information (e.g., CQI_initial) on the channel state. In an embodiment, the base station 300 may identify an initial compensation fractional MCS value by adding an initial offset value and an initial fractional MCS value.

In an embodiment, the change value determination module 711 may identify change values (e.g., Step_UP and Step_DN) corresponding to an initial compensation fractional MCS value (e.g., Fractional MCS_C_initial).

For another example, in case that the base station 300 receives information (e.g., CQI_1) on a channel state from the UE 200 at a first time point after the initial time point, the base station 300 may identify a new fractional MCS value (e.g., Fractional MCS_new) corresponding to the information (e.g., CQI_1) on the channel state. The base station 300 may identify the fractional MCS value (e.g., Fractional MCS_1) at the first time point based on [Equation 7]. In [Equation 7], alpha may correspond to a weight (or, forgetting factor).

Fractional MCS_1 = alpha * Fractional MCS_initial + (1 - alpha) * Fractional MCS_new          [Equation 7]

The base station 300 may identify a first compensation fractional MCS value (e.g., factional MCS_C1) by adding a fractional MCS value (e.g., fractional MCS_1) corresponding to the first time point and the first offset value. The first compensation fractional MCS value (e.g., factional MCS_C1) may be an MCS value applied to the UE 200.

For reference, [Equation 7] may be generalized to [Equation 4] by using time points t and t-1. For example, . Fractional MCS_new may correspond to a fractional MCS corresponding to channel information (e.g., a CQI) received at time point t.

In FIG. 7 of the disclosure, it is described that modules perform operations, but this is merely an example. For example, the operations performed by the modules of FIG. 7 may be performed by at least one processor and/or controller included in the base station 300.

FIG. 8 is a view illustrating a method for determining a second offset value according to an embodiment.

Referring to FIG. 8, in operation 801, the base station 300 according to an embodiment may receive information on HARQ indicating whether there is an error in data transmitted from the UE 200 to the base station 300.

According to an embodiment, in operation 803, the base station 300 may determine change values (e.g., Step_UP and Step_DN) for changing the first offset value based on the first compensation parameter. For example, the base station 300 may identify change values mapped to the first compensation parameter (e.g., a SINR, a SNR, or a fractional MCS). That is, the change values (e.g., Step_UP and Step_DN) for changing the first offset value may be determined based on a look-up table including change values corresponding to MCS levels.

According to an embodiment, the base station 300 may identify a target BLER mapped to the first compensation parameter, and the base station 300 may identify change values mapped to the target BLER.

For example, the first compensation parameter value (e.g., SINR_C1) may be substantially mapped to a first MCS level, and the first MCS level may be mapped to a plurality of target BLERs. In an embodiment, the first MCS level mapped to the first compensation parameter value may be mapped to a first target BLER (e.g., 10%) and a second target BLER (e.g., 40%).

In an embodiment, the first MCS level may be mapped to a first target BLER (e.g., 10%) in case that the first compensation parameter value falls within a first range, and the first MCS level may be mapped to a second target BLER (e.g., 40%) in case that the first compensation parameter value falls within a second range. The second range may be higher than the first range, and the second target BLER may be less than the first target BLER.

In an embodiment, in case that the base station 300 identifies a target BLER mapped to the first compensation parameter value, the base station 300 may identify a ratio of a decrease value (e.g., Step_DN) and an increase value (e.g., Step_UP) based on [Equation 8]. As a result, the base station 300 may identify change values mapped to the first compensation parameter.

[Equation 8]

$$\text{Step\_UP} * (1 - \text{BLER}_{target}) = \text{Step\_DN} * \text{BLER}_{target}$$

According to an embodiment, in operation 805, the base station 300 may determine the second offset value based on the information on HARQ and the change values.

For example, the base station 300 may identify information on an ACK and a NACK included in the information on HARQ (or, HARQ feedback). In an embodiment, the base station 300 may determine a difference between a product of the number of ACKs and the increase value (e.g., Step_UP) and a product of the number of NACKs and the decrease value (e.g., Step_DN) as a new offset value (e.g., offset_new). That is, the product of the number of ACKs and the increase value may have a positive sign, and the product of the number of NACKs and the decrease value may have a positive sign. The base station 300 may determine a difference between the product of the number of ACKs and the increase value and the product of the number of NACKs and the decrease value as a new offset value.

For another example, the product of the number of ACKs and the increase value may have a positive sign, and the product of the number of NACKs and the decrease value may have a negative sign. The base station 300 may determine a sum of the product of the number of ACKs and the increase value and the product of the number of NACKs and the decrease value as a new offset value. For another example, a difference between an absolute value of the product of the number of ACKs and the increase value and an absolute value of the number of NACKs and the decrease value may be determined as a new offset value.

According to an embodiment, the base station 300 may determine the second offset value based on the first offset value (e.g., offset_1) and the new offset value (e.g., offset_new). For example, the base station 300 may determine a sum of the first offset value (e.g., offset_1) and the new offset value (e.g., offset_new) as the second offset value.

For another example, the base station 300 may determine, as the second offset value, a sum of the first offset value (e.g., offset_1) multiplied by the first weight (e.g., alpha) and the new offset value (e.g., offset_new) multiplied by the second weight (e.g., 1-alpha).

For another example, the second offset value (e.g., offset_2) may be based on the product of the first offset value (e.g., offset_1) and the weight (e.g., alpha).

That is, the base station 300 may determine the second offset value (e.g., offset_2) based on [Equation 9], and in case that alpha is 0, the second offset value may be equal to the new offset value. For example, alpha may be a preconfigured value.

[Equation 9]

$$\text{Offset\_2} = \text{alpha} * \text{offset\_1} + (1 - \text{alpha}) * \text{offset\_new}$$

Operations 801, 803, and 805 described in FIG. 8 of the disclosure may correspond to or be included in operation 407 in FIG. 4. Accordingly, the embodiment in FIG. 8 may be combined with the embodiment in FIG. 4.

However, the description that operations 801, 803, and 805 may be included in operation 407 is merely an example and is not necessarily essential.

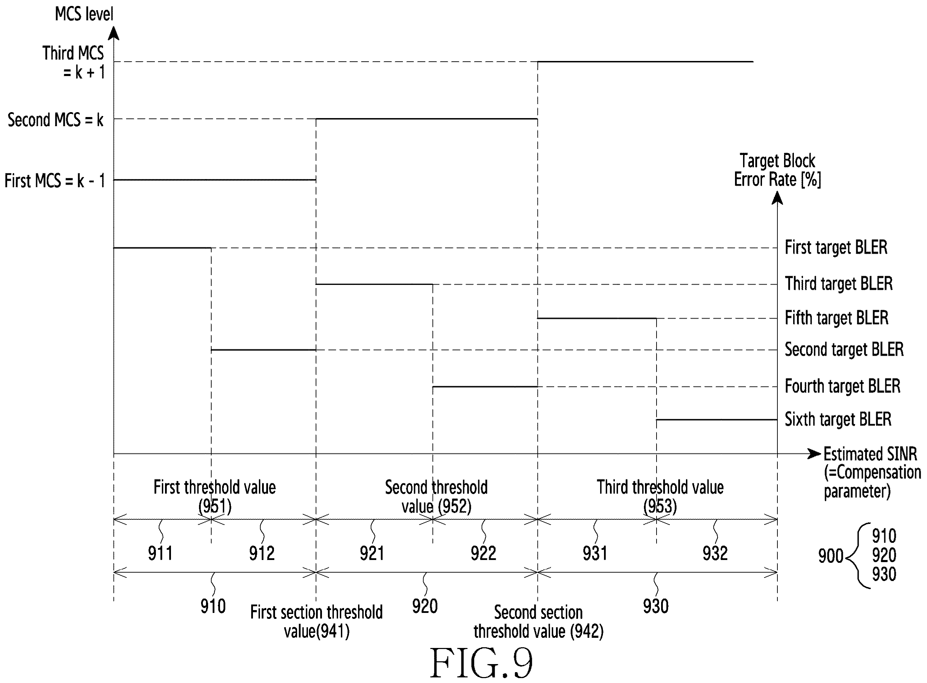

FIG. 9 is a view illustrating target BLERs for each MCS according to a parameter associated with a channel state according to an embodiment.

Referring to FIG. 9, an MCS (or MCS level) applied or allocated by the base station 300 to the UE 200 according to an embodiment may correspond to a plurality of target BLERs. That is, when the base station 300 transmits data to the UE 200 based on the MCS (or MCS level), the base station 300 may configure a plurality of target BLERs, and the base station 300 may determine one of the plurality of target BLERs based on the first compensation parameter (e.g., the SINR).

For example, a first MCS (or a first MCS level) may correspond to a first target BLER and a second target BLER. In case that the compensation parameter (e.g., the SINR) is included in a first range 911 of a first section 910 and the base station 300 transmits data based on the first MCS, the base station 300 may be configured with the first target BLER. For another example, in case that the compensation parameter is included in a second range 912 of the first section 910 and the base station 300 transmits data based on the first MCS, the base station 300 may be configured with the second target BLER. In an embodiment, the first target BLER may be higher than the second target BLER. In an embodiment, the second range 912 may be greater than the first range 911.

For example, a second MCS (or a second MCS level) may correspond to a third target BLER and a fourth target BLER. In case that the compensation parameter (e.g., the SINR) is included in a third range 921 of a second section 920 and the base station 300 transmits data based on the second MCS, the base station 300 may be configured with the third target BLER. For another example, in case that the compensation parameter is included in a fourth range 922 of the second section 920 and the base station 300 transmits data based on the second MCS, the base station 300 may be configured with the fourth target BLER. In an embodiment, the third target BLER may be higher than the fourth target BLER. In an embodiment, the fourth range 922 may be greater than the third range 921.

For example, a third MCS (or a third MCS level) may correspond to a fifth target BLER and a sixth target BLER. In case that the compensation parameter (e.g., the SINR) is included in a fifth range 931 of a third section 930 and the base station 300 transmits data based on the third MCS, the base station 300 may be configured with the fifth target BLER. For another example, in case that the compensation parameter is included in a sixth range 932 of the third section 930 and the base station 300 transmits data based on the third MCS, the base station 300 may be configured with the sixth target BLER. In an embodiment, the fifth target BLER may be higher than the sixth target BLER. In an embodiment, the sixth range 932 may be greater than the fifth range 931.

In FIG. 9 of the disclosure, it is described that the MCS (or the MCS level) corresponds to two target BLERs, but this is only an example. For example, the base station 300 may be configured with three or more target BLERs corresponding to one MCS. For example, the first MCS (or the first MCS level) may correspond to the first target BLER, the second target BLER, and the third target BLER.

According to an embodiment, a plurality of target BLERs corresponding to one MCS may be divided based on a compensation parameter value (e.g., the first compensation parameter value (e.g., SINR_C1)).

According to an embodiment, sections 900 of a compensation parameter value (e.g., the SINR or the SNR) may be divided based on at least one section threshold value for dividing the sections. For example, the first section 910 and the second section 920 may be divided based on a first section threshold value 941. That is, the first section threshold value 941 may correspond to a boundary between the first section 910 and the second section 920.

For example, the second section 920 and the third section 930 may be divided based on a second section threshold value 942. That is, the second section threshold value 942 may correspond to a boundary between the second section 920 and the third section 930.

According to an embodiment, ranges of compensation parameter values (e.g., a SINR and a SNR) may be divided by at least one threshold value. For example, the first range 911 and the second range 912 may be divided based on the first threshold value 951. That is, the first threshold value 951 may correspond to a boundary between the first range 911 and the second range 912.

For example, the third range 921 and the fourth range 922 may be divided based on the second threshold value 952. That is, the second threshold value 952 may correspond to a boundary between the third range 921 and the fourth range 922.

For example, the fifth range 931 and the sixth range 932 may be divided based on the third threshold value 953. That is, the third threshold value 953 may correspond to a boundary between the fifth range 931 and the sixth range 932.

According to an embodiment, when the base station 300 configures a plurality of target BLERs for one MCS, the base station 300 may reduce or prevent the transmission rate of data transmitted to the UE 200 from being deteriorated. For example, in case that the base station 300 configures only the second target BLER (e.g., 10%) for the first MCS (or the first MCS level), the actual BLER may increase as the first compensation parameter value decreases. In order to increase the actual BLER, the base station 300 may determine the MCS level applied to the UE 200 to be a lower MCS level than the first MCS level. However, in case that the first compensation parameter value is included in the first range 911, although the first compensation parameter value is relatively small, the UE 200 may still receive data without difficulty even if the base station 300 transmits data based on the first MCS. As a result, the base station 300 may unnecessarily lower the MCS level by considering the second target BLER (e.g., 10%), thereby reducing the throughput of data.

For another example, the base station 300 may configure only the first target BLER (e.g., 40%) for the first MCS (or, the first MCS level) and the compensation parameter value may be included in the second range 912. As the first target BLER is configured relatively high, the base station 300 may change the MCS level applied to the UE 200 from the first MCS level to the second MCS level in the second range 912. However, in case that the compensation parameter value is included in the second range 912 and the base station 300 transmits data to the UE 200 based on the second MCS level, the error rate (e.g., the BLER) of the data received by the UE 200 may increase. Accordingly, the UE 200 may not utilize the received data or may repeatedly transmit HARQ feedback including a NACK to the base station 300. As a result, the base station 300 may need to retransmit data to the UE 200, and a data processing amount may actually decrease even though the MCS level is increased.

That is, in case that the base station 300 configures only one target BLER for one MCS level, there may be an issue in which the base station 300 may not efficiently transmit data to the UE 200.

Meanwhile, in the case that the base station 300 is configured with a plurality of target BLERs for one MCS level according to one embodiment, the base station 300 may adaptively change a target BLER according to the range of the compensation parameter value (e.g., the SINR). As a result, the base station 300 may efficiently transmit data to the UE 200. For example, the base station 300 may be configured with the first target BLER (e.g., 40%) in the first range 911, and may be configured with the second target BLER (e.g., 10%) in the second range 912. That is, since the target BLER is configured high in the first range 911 in which the compensation parameter value is relatively low, the base station 300 may avoid unnecessarily lowering the MCS level in the first range 911. Furthermore, in the second range 912 in which the compensation parameter value is relatively high, since the target BLER is configured low, the base station 300 may prevent or reduce an increase in the retransmission rate due to unnecessarily increasing of the MCS level in the second range 912.

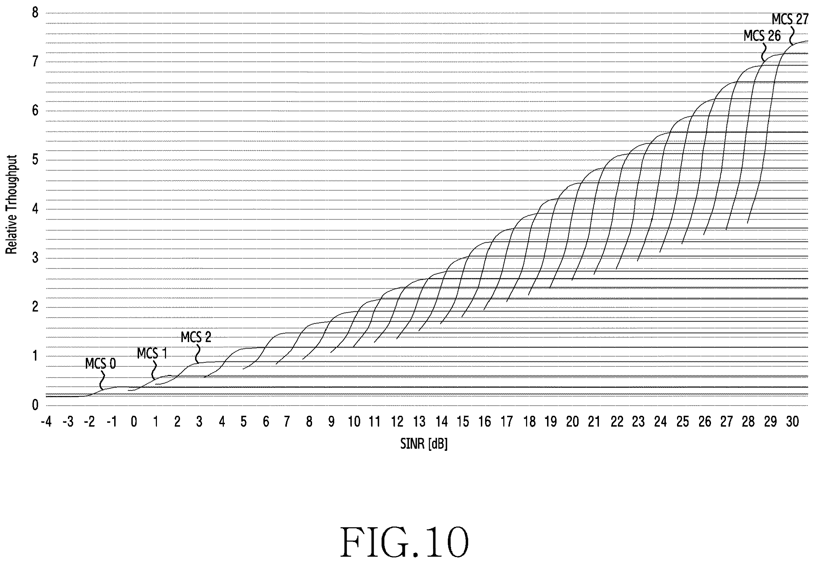

FIG. 10 is a view illustrating a throughput according to a SINR for each MCS level according to an embodiment.

Referring to FIG. 10, according to an embodiment, the relative throughput according to a SINR value identified by the base station 300 in the case of a low MCS level is illustrated from the left. For example, the SINR identified by the base station 300 may correspond to the compensation parameter value described in FIGS. 4 to 7.

According to an embodiment, a higher MCS level increases a relative throughput based on the same SINR. For example, when the MCS level is 1, the relative throughput increases compared to when the MCS level is 0. For example, when the MCS level is 2, the relative throughput increases compared to when the MCS level is 1. For example, when the MCS level is 27, the relative throughput increases compared to when the MCS level is 26.

According to an embodiment, in case that the first MCS level (or, the first MCS) is fixed, a higher compensation parameter value (e.g., SINR) may reduce packet errors. In case that the base station 300 transmits data based on the first MCS level without MCS level change, a transmission efficiency (e.g., data throughput) may decrease compared to the case where the base station 300 transmits data based on the second MCS level (or, second MCS) higher than the first MCS level. Meanwhile, in case that the base station 300 changes the MCS level applied to the UE 200 from the first MCS level to the second MCS level as the compensation parameter value increases, an effective transmission rate may decrease and the throughput may even decrease. Therefore, the base station 300 needs to select an MCS level (or, an MCS) having a maximum throughput according to the compensation parameter value (e.g., the SINR). That is, the base station 300 may need to determine to change the MCS level based on the compensation parameter value (e.g., the SINR), the BLER (or, packet error), and the data throughput.

According to an embodiment, in case that the first MCS level (or, the first MCS) is fixed, a lower compensation parameter value (e.g., a SINR) may reduce packet errors. In case that the base station 300 transmits data based on the first MCS level without MCS level change, an effective transmission rate may decrease compared to the case where the base station 300 transmits data based on the third MCS level (or, third MCS) lower than the first MCS level. Meanwhile, in case that the base station 300 changes the MCS level applied to the UE 200 from the first MCS level to the third MCS level as the compensation parameter value decreases, a data throughput may be reduced as the MCS level is unnecessarily changed. As a result, the base station 300 needs to select an MCS level (or, an MCS) having a maximum throughput according to the compensation parameter value (e.g., the SINR). That is, the base station 300 may need to determine to change the MCS level based on the compensation parameter value (e.g., the SINR), the BLER (or, packet error), and the data throughput.

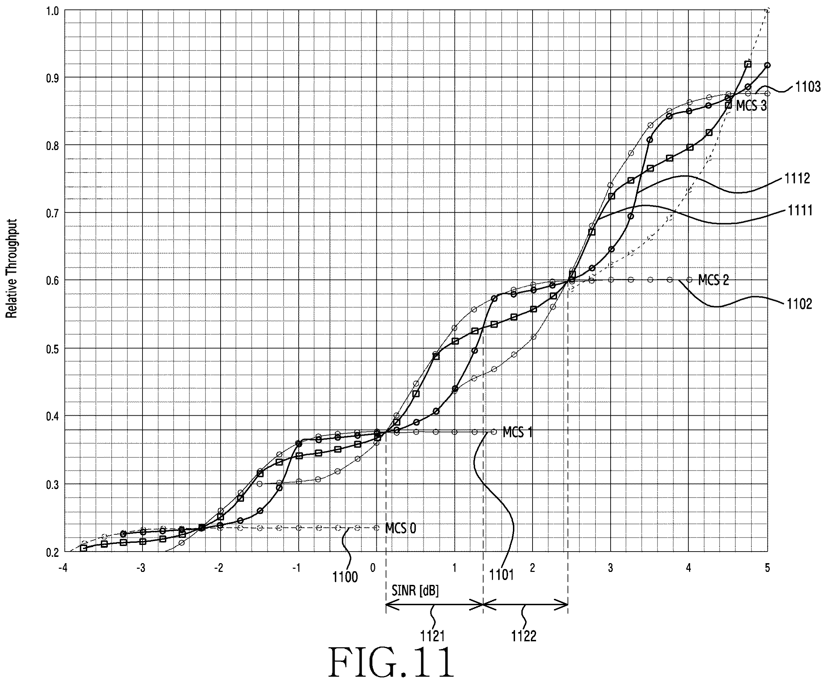

FIG. 11 is a view illustrating a relative throughput according to a compensation parameter value for each MCS level in designated ranges according to an embodiment.

Referring to FIG. 11, a first graph 1100 according to an embodiment depicts a relative throughput of the base station 300 according to a compensation parameter value (e.g., a SINR) in case that a MCS level applied to the UE 200 is 0. A second graph 1101 depicts a relative throughput of the base station 300 according to a compensation parameter value in case that a MCS level applied to the UE 200 is 1. A third graph 1102 depicts a relative throughput of the base station 300 according to a compensation parameter value in case that a MCS level applied to the UE 200 is 2. A fourth graph 1103 depicts a relative throughput of the base station 300 according to a compensation parameter value in case that a MCS level is 3.

According to an embodiment, a first target BLER graph 1111 is a relative throughput of the base station 300 according to a compensation parameter value in case that a target BLER value of the base station 300 is 40%. A second target BLER graph 1112 is a relative throughput of the base station 300 according to a compensation parameter value in case that a target BLER value of the base station 300 is 10%. For example, the first target BLER graph 1111 has a relatively high throughput in a low SINR section (e.g., a first range 1121), and the second target BLER graph 1112 has a relatively high throughput value in a high SINR section (e.g., a second range 1122). Referring to the second target BLER graph 1112, a data throughput may be reduced by up to 20% in the low SINR section.

According to an embodiment, in case that the compensation parameter value is in the first range 1121, the first target BLER graph 1111 has a relatively higher value than the second target BLER graph 1112. In case that the compensation parameter value is in the second range 1122, the second target BLER graph 1112 has a relatively higher value than the first target BLER graph 1111.

In other words, the base station 300 may need to be configured with the first target BLER in the first range 1121 to increase the relative throughput when transmitting data based on MCS 2, and the base station 300 may need to be configured with the second target BLER in the second range 1122.

According to an embodiment, the base station 300 of the disclosure may be configured with a plurality of BLERs for one MCS, and the base station 300 may be configured with the first target BLER (e.g., 40%) in the first range 1121 in which the compensation parameter value is relatively low. The base station 300 may be configured with the second target BLER (e.g., 10%) in the second range 1122 in which the compensation parameter value is relatively high.

As a result, the base station 300 may not unnecessarily change the MCS level from MCS2 to MCS 1 in the first range 1121 and may not change the MCS level from MCS 2 to MCS 3 while increasing an error rate in the second range 1122. That is, the base station 300 may maximize or increase the relative throughput by maintaining the MCS level at MCS 2 in the first range 1121 and the second range 1122.

FIG. 11 of the disclosure illustrates graphs of the MCS graphs shown in FIG. 10 in which the value of the compensation parameter (e.g., the SINR) is from about - 4 to 5. That is, FIG. 11 may be referred to as an enlarged view of the graphs described in FIG. 10 in which the SINR value is from about -4 to 5.

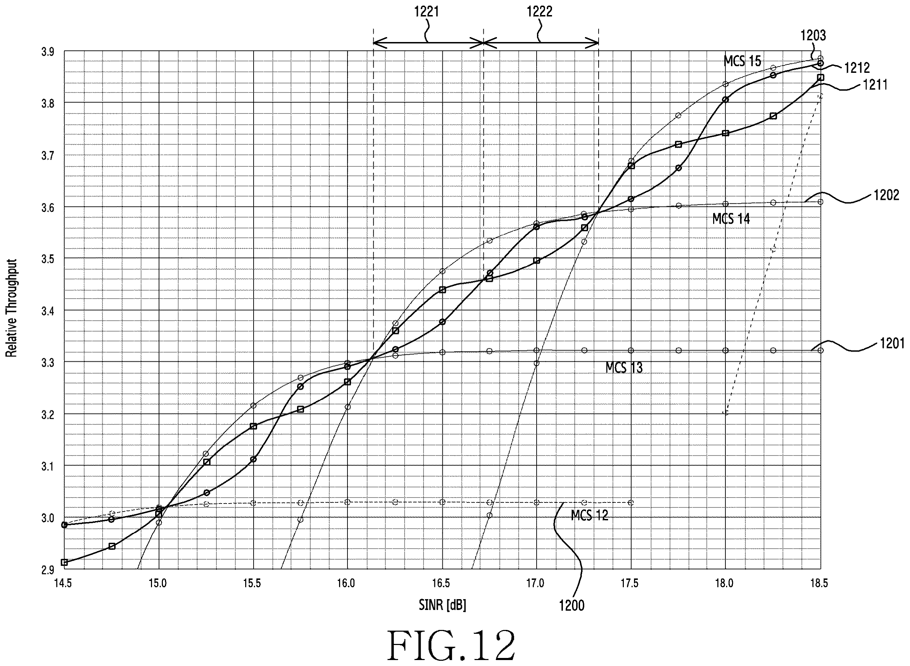

FIG. 12 is a view illustrating a relative throughput according to a compensation parameter value for each MCS level in designated ranges according to an embodiment.

Referring to FIG. 12, a first graph 1200 according to an embodiment depicts a relative throughput of the base station 300 according to a compensation parameter value (e.g., a SINR) in case that a MCS level applied to the UE 200 is 12. A second graph 1201 depicts a relative throughput of the base station 300 according to a compensation parameter value in case that a MCS level applied to the UE 200 is 13. A third graph 1202 depicts a relative throughput of the base station 300 according to a compensation parameter value in case that a MCS level applied to the UE 200 is 14. A fourth graph 1203 depicts a relative throughput of the base station 300 according to a compensation parameter value in case that a MCS level is 15.

According to an embodiment, a third target BLER graph 1211 is a relative throughput of the base station 300 according to a compensation parameter value in case that a target BLER value of the base station 300 is 10%. A fourth target BLER graph 1212 is a relative throughput of the base station 300 according to a compensation parameter value in case that a target BLER value of the base station 300 is 3%. For example, the third target BLER graph 1211 has a relatively high throughput value in a low SINR section (e.g., the first range 1221). Referring to the third target BLER graph 1211, a data throughput may be reduced by up to 3-4% in a high SINR section. For example, the fourth target BLER graph 1212 has a relatively high throughput value in a high SINR section (e.g., the second range 1222).

According to an embodiment, in case that the compensation parameter value is in the first range 1221, the third target BLER graph 1211 has a relatively higher value than the fourth target BLER graph 1212. In case that the compensation parameter value is in the second range 1222, the fourth target BLER graph 1212 has a relatively higher value than the third target BLER graph 1211.

In other words, the base station 300 may need to be configured with the third target BLER in the first range 1221 to increase the relative throughput when transmitting data based on MCS 14, and the base station 300 may need to be configured with the fourth target BLER in the second range 1222.

According to an embodiment, the base station 300 of the disclosure may be configured with a plurality of BLERs for one MCS, and the base station 300 may be configured with the third target BLER (e.g., 10%) in the first range 1221 in which the compensation parameter value is relatively low. The base station 300 may be configured with the fourth target BLER (e.g., 3%) in the second range 1222 in which the compensation parameter value is relatively high.

As a result, the base station 300 may not unnecessarily change the MCS level from MCS 14 to MCS 13 in the first range 1221 and may not change the MCS level from MCS 14 to MCS 15 while increasing an error rate in the second range 1222. That is, the base station 300 may maximize or increase the relative throughput by maintaining the MCS level at MCS 14 in the first range 1221 and the second range 1222.

FIG. 12 of the disclosure illustrates graphs of the MCS graphs shown in FIG. 10 in which the value of the compensation parameter (e.g., the SINR) is from about 14.5 to about 18.5. That is, FIG. 12 may be referred to as an enlarged view of the graphs described in FIG. 10 in which the SINR value is from about 14.5 to 18.5.

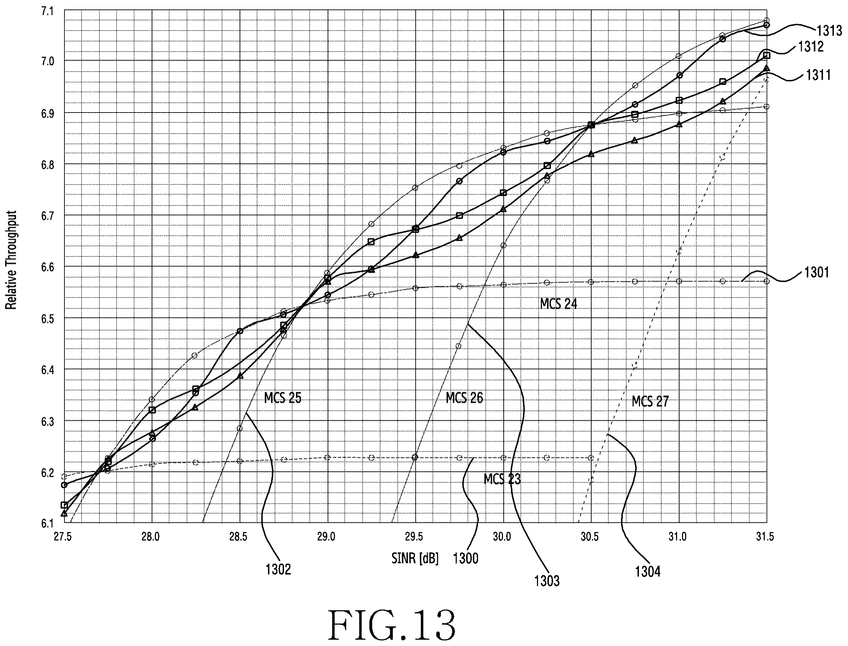

In FIGS. 11 and 12 of the disclosure, it is described that the base station 300 is configured with two target BLERs for one MCS level, but this is only an example. For example, the base station 300 may be configured with three or more target BLERs for one MCS. Hereinafter, FIG. 13 describes a case where the base station 300 configures three target BLERs for one MCS level.

FIG. 13 is a view illustrating a relative throughput according to a compensation parameter value for each MCS level in designated ranges according to an embodiment.

Referring to FIG. 13, a first graph 1300 according to an embodiment depicts a relative throughput of the base station 300 according to a compensation parameter value (e.g., a SINR) in case that a MCS level applied to the UE 200 is 23. A second graph 1301 depicts a relative throughput of the base station 300 according to a compensation parameter value in case that a MCS level applied to the UE 200 is 24. A third graph 1302 depicts a relative throughput of the base station 300 according to a compensation parameter value in case that a MCS level applied to the UE 200 is 25. A fourth graph 1303 depicts a relative throughput of the base station 300 according to a compensation parameter value in case that a MCS level is 26. A fifth graph 1304 depicts a relative throughput of the base station 300 according to a compensation parameter value in case that a MCS level is 27.

According to an embodiment, a first target BLER graph 1311 is a relative throughput of the base station 300 according to a compensation parameter value in case that a target BLER value of the base station 300 is 10%. A second target BLER graph 1312 is a relative throughput of the base station 300 according to a compensation parameter value in case that a target BLER value of the base station 300 is 8%. A third target BLER graph 1313 is a relative throughput of the base station 300 according to a compensation parameter value in case that a target BLER value of the base station 300 is 3%.

For example, referring to the first target BLER graph 1311, a data processing amount may be reduced by about 3-4% in all sections compared to the first graph 1301 to the fourth graph 1304. Referring to the second target BLER graph 1312, a data processing amount may be relatively high in a low SINR section. Referring to the third target BLER graph 1313, a data processing amount may be relatively high in a high SINR section.

According to an embodiment, the case is described where the base station 300 is configured two target BLERs for one MCS level or MCS in FIGS. 11 and 12, but this is only an example. FIG. 13 of the disclosure corresponds to a case where the base station 300 is configured with three target BLERs for one MCS.

According to an embodiment, the base station 300 may be configured with three target BLERs for one MCS, and the base station 300 may determine or select one of the three target BLERs according to a compensation parameter value (e.g., the SINR).

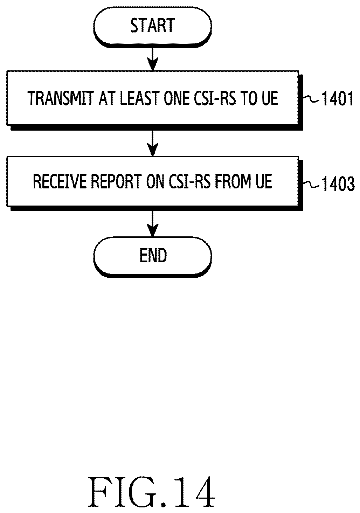

FIG. 14 is a view illustrating a feature of a base station receiving a report on CSI-RS from a UE according to an embodiment.

Referring to FIG. 14, the base station 300 according to an embodiment may transmit at least one CSI-RS to the UE 200 in operation 1401. For example, the base station 300 may transmit various types of RSs to the UE 200 periodically or at each necessary time point.

According to an embodiment, in operation 1403, the base station 300 may receive a report on the CSI-RS from the UE 200. For example, the UE 200 may update or identify CQI information, RI information and/or PMI information based on at least one received CSI-RS. The UE 200 may transmit the identified or updated CQI information, RI information, and/or PMI information to the base station 300 as uplink control information (UCI). That is, the UE 200 may transmit control information including the identified or updated CQI information, RI information, and/or PMI information to the base station 300.

Operations 1401 and 1403 of the disclosure may be performed prior to operation 401 in FIG. 4. Accordingly, the embodiment in FIG. 14 of the disclosure may be combined with the embodiment in FIG. 4.

In FIG. 14 of the disclosure, it is described that the base station 300 performs operations, but this is merely an example. For example, the operations performed by the base station 300 of FIG. 14 may be performed by at least one processor and/or controller included in the base station 300.

However, a coupling relationship between the above-described operations is merely an example and does not limit the disclosure. In addition, it may not be an essential feature of the disclosure that operations 1401 and 1403 are performed before operation 401.

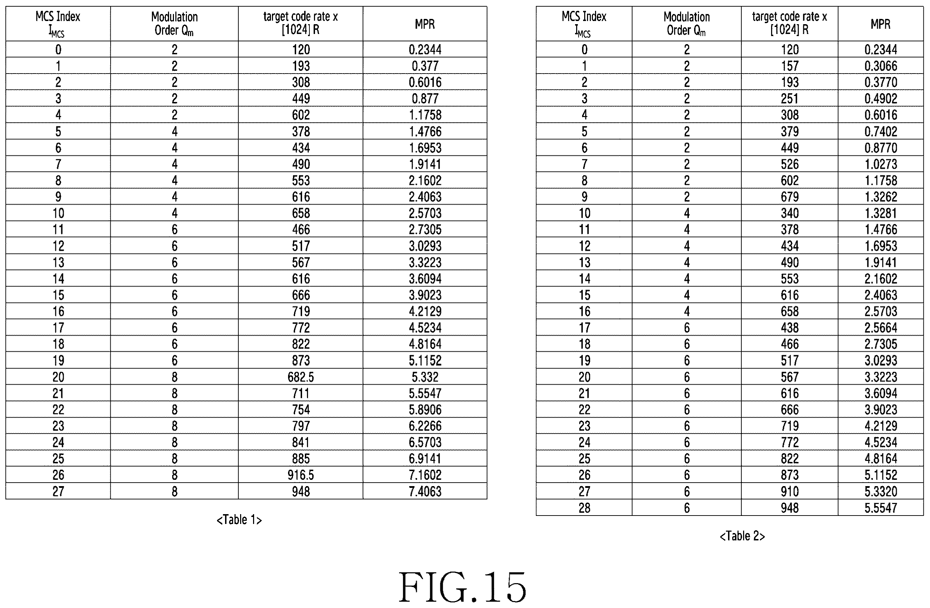

FIG. 15 is a view illustrating a modulation order, target code rate, and MPR according to an MCS level according to an embodiment.

Referring to FIG. 15, <Table 1> according to an embodiment illustrates a modulation order, a target code rate, and an MPR according to the MCS level (or MCS index) in case that the MCS is 256QAM.

According to an embodiment, <Table 2> illustrates a modulation order, a target code rate, and an MPR according to the MCS level (or MCS index) when the MCS is 64QAM.

According to an embodiment, a method performed by a base station in a wireless communication system may include an operations of obtaining, from a UE, first channel information indicating a channel state between the base station and the UE, an operation of determining a first compensation parameter value based on a first parameter value associated with the channel state, which has been determined based on the first channel information indicating the channel state, and a first offset value for compensation of the first parameter value associated with the channel state, an operation of determining, based on the first compensation parameter value, as a first modulation and coding scheme (MCS) level, an MCS level applied to the UE, an operation of determining a second offset value for compensation of the first compensation parameter value based on the determined first compensation parameter value, an operation of determining a second compensation parameter value based on a second parameter value associated with the channel state, which has been determined based on second channel information indicating the channel state and the second offset value, and an operation of determining the MCS level to be applied to the UE, based on the second compensation parameter.

According to an embodiment, the operation of determining the second offset value for compensating of the first compensation parameter value based on the determined first compensation parameter value may include an operation of receiving, from the UE, information on hybrid automatic repeat and request (HARQ) indicating whether data transmitted from the base station has an error, an operation of determining change values for changing the first offset value based on the first MCS level, and an operation of determining the second offset value based on the information on the received HARQ and the change values.

According to an embodiment, the change values for changing the first offset value may include a decrease value for decreasing the first offset value and an increase value for increasing the first offset value. The operation of determining the second offset value based on the information on the received HARQ and the change values may include an operation of identifying a difference between a value obtained by multiplying the number of acknowledges (ACKs) identified based on the information on the HARQ by the increase value and a value obtained by multiplying the number of negative acknowledges (NACKS) by the decrease value, and an operation of determining a value obtained by adding the difference to the first offset value as the first offset value.

According to an embodiment, the change values for changing the first offset value may be determined based on a look-up table including change values corresponding to MCS levels.

According to an embodiment, the base station may be configured with a plurality of target block error rates (BLERs) corresponding to each of MCS levels applicable to the UE. The plurality of target BLERs may be divided based on the first compensation parameter value.

According to an embodiment, a plurality of target BLERs configured in case that modulation is performed based on the first MCS level may include a first target BLER corresponding to a case in which the first compensation parameter value is included in a first range, and a second target BLER corresponding to a case in which the first compensation parameter value is included in a second range greater than the first range. The second target BLER may be smaller than the first target BLER.

According to an embodiment, the operation of determining the MCS level to be applied to the UE based on the second compensation parameter value may include an operation of determining the MCS level to be a second MCS level lower than the first MCS level, an operation of determining the MCS level to be a third MCS level higher than the first MCS level, or an operation of maintaining the MCS level at the first MCS level.

According to an embodiment, the method may further include an operation of transmitting data to the UE based on the MCS level determined based on the second compensation parameter value.

According to an embodiment, the second parameter value associated with the channel state may be determined based on a product of the first parameter value associated with the channel state and a weight.

According to an embodiment, the second offset value may be determined based on a product of the first offset value and a weight.

According to an embodiment, the second channel information may be received from the UE at a second time point that is after a first time point at which the first channel information is received.

According to an embodiment, the method may further include an operation of determining the first offset value based on a block error rate (BLER) configured to the base station.

According to an embodiment, the method may further include an operation of transmitting at least one channel state information reference signal (CSI-RS) to the UE, and an operation of receiving a report on the CSI-RS from the UE. The first channel information and the second channel information indicating the channel state may be included in the received report on the CSI-RS.

According to an embodiment, the first channel information may include at least one of a channel quality indicator (CQI), a precoding matrix indicator (PMI), or a synchronization signal block resource indicator (SSBRI). The first parameter value associated with the channel state may include at least one of a signal to interference plus noise ratio (SINR), a signal to noise ratio (SNR), or a fractional MCS indicating an MCS level using a real number.

According to an embodiment, in a wireless communication system, a base station may include a transceiver and a controller connected to the transceiver. The controller may be configured to obtain, from a UE, first channel information indicating a channel state between the base station and the UE, determine a first compensation parameter value based on a first parameter value associated with the channel state, which has been determined based on the first channel information indicating the channel state, and a first offset value for compensation of the first parameter value associated with the channel state, determine, based on the first compensation parameter value, as a first modulation and coding scheme (MCS) level, an MCS level applied to the UE, determine a second offset value for compensation of the first compensation parameter value based on the determined first compensation parameter value, determine a second compensation parameter value based on a second parameter value associated with the channel state, which has been determined based on second channel information indicating the channel state and the second offset value, and determine the MCS level to be applied to the UE, based on the second compensation parameter.

According to an embodiment, the controller may be configured to receive, from the UE, information on hybrid automatic repeat and request (HARQ) indicating whether data transmitted from the base station has an error, determine change values for changing the first offset value based on the first MCS level, and determine the second offset value based on the information on the received HARQ and the change values.

According to an embodiment, the change values for changing the first offset value may include a decrease value for decreasing the first offset value and an increase value for increasing the first offset value. According to an embodiment, the controller may be configured to identify a difference between a value obtained by multiplying the number of acknowledges (ACKs) identified based on the information on the HARQ by the increase value and a value obtained by multiplying the the number of negative acknowledges (NACKs) by the decrease value and determine a value obtained by adding the difference to the first offset value as the first offset value.

According to an embodiment, the change values for changing the first offset value may be determined based on a look-up table including change values corresponding to MCS levels.

According to an embodiment, the base station may be configured with a plurality of target block error rates (BLERs) corresponding to each of MCS levels applicable to the UE. The plurality of target BLERs may be divided based on parameter values associated with the channel states.

According to an embodiment, a plurality of target BLERs configured in case that modulation is performed based on the first MCS level may include a first target BLER corresponding to a case in which the first parameter value associated with the channel state is included in a first range, and a second target BLER corresponding to a case in which the first parameter value associated with the channel state is included in a second range greater than the first range. The second target BLER may be smaller than the first target BLER.

Although exemplary embodiments of the disclosure have been described and shown in the specification and the drawings by using particular terms, they have been used in a general sense merely to easily explain the technical contents of the disclosure and help understanding of the disclosure, and are not intended to limit the scope of the disclosure. It will be apparent to those skilled in the art that, in addition to the embodiments set forth herein, other variants based on the technical idea of the disclosure may be implemented.

**Claims**

1. A method performed by a base station in a wireless communication system, the method comprising:

   obtaining, from a terminal, first channel information indicating a channel state between the base station and the terminal;
   determining a first compensation parameter value based on a first parameter value associated with the channel state, which is determined based on the first channel information indicating the channel state, and a first offset value for compensation of the first parameter value associated with the channel state;
   determining a modulation and coding scheme (MCS) level applied to the terminal as a first MCS level, based on the first compensation parameter value;
   determining a second offset value for compensation of the first compensation parameter value, based on the determined first compensation parameter value;
   determining a second compensation parameter value, based on a second parameter value associated with the channel state, which is determined based on second channel information indicating the channel state, and the second offset value; and
   determining the MCS level applied to the terminal, based on the second compensation parameter, determining the MCS level applied to the terminal.

2. The method of claim 1, wherein the determining of the second offset value for compensation of the first compensation parameter value, based on the determined first compensation parameter value, comprises:

   receiving, from the terminal, information on hybrid automatic repeat and request (HARQ) indicating whether there is an error in data transmitted from the base station;
   determining change values for changing the first offset value, based on the first MCS level; and
   determining the second offset value, based on the received information on the HARQ and the change values.

3. The method of claim 2, wherein the change values for changing the first offset value comprise a decrease value for decreasing the first offset value and an increase value for increasing the first offset value,
   wherein the determining of the second offset value, based on the received information on the HARQ and the change values, comprises:

   identifying a difference between a value obtained by multiplying the number of acknowledges (ACKs) identified based on the information on the HARQ by the increase value and a value obtained by multiplying the number of negative acknowledges (NACKs) identified based on the information on the HARQ by the decrease value; and
   determining a value obtained by adding the difference to the first offset value as the first offset value.

4. The method of claim 2, wherein the change values for changing the first offset value are determined based on a look-up table comprising change values corresponding to MCS levels.

5. The method of claim 1, wherein the base station is configured with a plurality of target block error rates (BLERs) corresponding to each of MCS levels applicable to the terminal, and
wherein the plurality of target BLERs are classified based on the first compensation parameter value.

6. The method of claim 1, wherein a plurality of target BLERs configured in case that modulation is performed based on the first MCS level comprise:

a first target BLER corresponding to a case in which the first compensation parameter value is included in a first range; and
a second target BLER corresponding to a case in which the first compensation parameter value is included in a second range greater than the first range, and
wherein the second target BLER is smaller than the first target BLER.

7. The method of claim 1, wherein the determining of the MCS level applied to the terminal, based on the second compensation parameter value, comprises:

determining the MCS level as a second MCS level lower than the first MCS level;
determining the MCS level as a third MCS level higher than the first MCS level; or
maintaining the MCS level as the first MCS level.

8. The method of claim 1, further comprising:
transmitting data to the terminal, based on the MCS level determined based on the second compensation parameter value.

9. The method of claim 1, wherein the second parameter value associated with the channel state is determined based on a product of the first parameter value associated with the channel state by a weight.

10. The method of claim 1, wherein the second offset value is determined based on a product of the first offset value by a weight.

11. The method of claim 1, wherein the second channel information is received from the terminal at a second time point after a first time point at which the first channel information is received.

12. The method of claim 1, further comprising:
determining the first offset value, based on a block error rate (BLER) configured for the base station.

13. The method of claim 1, further comprising:

transmitting at least one channel state information-reference signal (CSI-RS) to the terminal; and
receiving a report on the CSI-RS from the terminal,
wherein the first channel information and second channel information indicating the channel state are included in the received report on the CSI-RS.

14.

The method of claim 1, wherein the first channel information comprises at least one of a channel quality indicator (CQI), a precoding matrix indicator (PMI), or a synchronization signal block resource indicator (SSBRI), and
wherein the first parameter value associated with the channel state comprises at least one of a signal to interference plus noise ratio (SINR), a signal to noise ratio (SNR), or a fractional MCS indicating an MCS level by means of a real number.

15. A base station in a wireless communication system, the base station comprising:

a transceiver; and
a controller connected to the transceiver,
wherein the controller is configured to:

obtain, from a terminal, first channel information indicating a channel state between the base station and the terminal;

determine a first compensation parameter value based on a first parameter value associated with the channel state, which is determined based on the first channel information indicating the channel state, and a first offset value for compensation of the first parameter value associated with the channel state;

determine a modulation and coding scheme (MCS) level applied to the terminal as a first MCS level, based on the first compensation parameter value;

determine a second offset value for compensation of the first compensation parameter value, based on the determined first compensation parameter value;

determine a second compensation parameter value, based on a second parameter value associated with the channel state, which is determined based on second channel information indicating the channel state, and the second offset value; and

determine the MCS level applied to the terminal, based on the second compensation parameter value.

FIG.1

EP 4 686 119 A1

200

230 — Processor ⟷ Transceiver ~210

⟷ Memory ~220

# FIG.2

23

300

330 — Processor ⟷ Transceiver — 310

⟷ Memory — 320

# FIG.3

START

OBTAIN, FROM UE, FIRST CHANNEL INFORMATION INDICATING CHANNEL STATE BETWEEN BASE STATION AND UE  ⌐401

DETERMINE FIRST COMPENSATION PARAMETER VALUE BASED ON FIRST PARAMETER VALUE ASSOCIATED WITH CHANNEL STATE, WHICH HAS BEEN DETERMINED BASED ON FIRST CHANNEL INFORMATION, AND FIRST OFFSET VALUE FOR COMPENSATING FIRST PARAMETER VALUE ASSOCIATED WITH CHANNEL STATE  ⌐403

DETERMINE, AS FIRST MCS LEVEL, MCS LEVEL APPLIED TO UE, BASED ON FIRST COMPENSATION PARAMETER VALUE  ⌐405

DETERMINE SECOND OFFSET VALUE FOR COMPENSATING FIRST COMPENSATION PARAMETER VALUE, BASED ON FIRST COMPENSATION PARAMETER VALUE  ⌐407

DETERMINE SECOND COMPENSATION PARAMETER VALUE, BASED ON SECOND PARAMETER VALUE ASSOCIATED WITH CHANNEL STATE, WHICH HAS BEEN DETERMINED BASED ON SECOND CHANNEL INFORMATION INDICATING CHANNEL STATE, AND SECOND OFFSET VALUE  ⌐409

DETERMINE MCS LEVEL APPLIED TO UE, BASED ON SECOND COMPENSATION PARAMETER VALUE  ⌐411

END

# FIG.4

FIG.5

FIG.6

EP 4 686 119 A1

FIG.7

EP 4 686 119 A1

FIG.8

29

FIG.9

FIG.10

EP 4 686 119 A1

FIG.11

FIG.12

FIG.13

START

TRANSMIT AT LEAST ONE CSI-RS TO UE — 1401

RECEIVE REPORT ON CSI-RS FROM UE — 1403

END

FIG.14

| MCS Index $I_{MCS}$ | Modulation Order $Q_m$ | target code rate x [1024] R | MPR |
|---|---|---|---|
| 0 | 2 | 120 | 0.2344 |
| 1 | 2 | 193 | 0.377 |
| 2 | 2 | 308 | 0.6016 |
| 3 | 2 | 449 | 0.877 |
| 4 | 2 | 602 | 1.1758 |
| 5 | 4 | 378 | 1.4766 |
| 6 | 4 | 434 | 1.6953 |
| 7 | 4 | 490 | 1.9141 |
| 8 | 4 | 553 | 2.1602 |
| 9 | 4 | 616 | 2.4063 |
| 10 | 4 | 658 | 2.5703 |
| 11 | 6 | 466 | 2.7305 |
| 12 | 6 | 517 | 3.0293 |
| 13 | 6 | 567 | 3.3223 |
| 14 | 6 | 616 | 3.6094 |
| 15 | 6 | 666 | 3.9023 |
| 16 | 6 | 719 | 4.2129 |
| 17 | 6 | 772 | 4.5234 |
| 18 | 6 | 822 | 4.8164 |
| 19 | 6 | 873 | 5.1152 |
| 20 | 8 | 682.5 | 5.332 |
| 21 | 8 | 711 | 5.5547 |
| 22 | 8 | 754 | 5.8906 |
| 23 | 8 | 797 | 6.2266 |
| 24 | 8 | 841 | 6.5703 |
| 25 | 8 | 885 | 6.9141 |
| 26 | 8 | 916.5 | 7.1602 |
| 27 | 8 | 948 | 7.4063 |

<Table 1>

| MCS Index $I_{MCS}$ | Modulation Order $Q_m$ | target code rate x [1024] R | MPR |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |

<Table 2>

# FIG.15

## INTERNATIONAL SEARCH REPORT

| International application No. |
|---|
| **PCT/KR2024/001510** |

| A. | CLASSIFICATION OF SUBJECT MATTER |
|---|---|
| | **H04L 1/00**(2006.01)i; **H04L 1/18**(2006.01)i; **H04L 1/20**(2006.01)i |

According to International Patent Classification (IPC) or to both national classification and IPC

| B. | FIELDS SEARCHED |
|---|---|

Minimum documentation searched (classification system followed by classification symbols)

H04L 1/00(2006.01); H04B 17/336(2015.01); H04B 7/04(2006.01); H04L 1/18(2006.01); H04W 24/02(2009.01); H04W 64/00(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 기지국(base station), 단말(terminal), 채널 상태(channel condition), 오프셋 (offset), 보정 파라미터 값(compensation parameter value), MCS(modulation and coding scheme), HARQ(hybrid automatic repeat request)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2022-0081771 A (SAMSUNG ELECTRONICS CO., LTD. et al.) 16 June 2022 (2022-06-16) <br> See paragraphs [0063]-[0100]; claims 1-5; and figures 5-6. | 1-15 |
| A | KR 10-2020-0013616 A (INFOSEIZE SYSTEMS CO., LTD. et al.) 07 February 2020 (2020-02-07) <br> See paragraphs [0044]-[0051]; claims 17 and 22; and figure 2. | 1-15 |
| A | KR 10-2197717 B1 (ELECTRONICS AND TELECOMMUNICATIONS RESEARCH INSTITUTE) 31 December 2020 (2020-12-31) <br> See paragraphs [0272]-[0285]; and figures 3-4. | 1-15 |
| A | CN 104919745 B (HUAWEI TECHNOLOGIES CO., LTD.) 06 November 2018 (2018-11-06) <br> See claims 1-4. | 1-15 |
| A | US 2019-0349789 A1 (HUAWEI TECHNOLOGIES CO., LTD.) 14 November 2019 (2019-11-14) <br> See claims 1-5. | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 May 2024** | **27 May 2024** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/001510**

| Patent document cited in search report | | | Publication date (day/month/year) | Patent family member(s) | | | Publication date (day/month/year) |
|---|---|---|---|---|---|---|---|
| KR | 10-2022-0081771 | A | 16 June 2022 | US | 2023-0327798 | A1 | 12 October 2023 |
| | | | | WO | 2022-124759 | A1 | 16 June 2022 |
| KR | 10-2020-0013616 | A | 07 February 2020 | CN | 112534922 | A | 19 March 2021 |
| | | | | EP | 3833136 | A1 | 09 June 2021 |
| | | | | KR | 10-2021-0078468 | A | 28 June 2021 |
| | | | | KR | 10-2411353 | B1 | 22 June 2022 |
| | | | | US | 11483831 | B2 | 25 October 2022 |
| | | | | US | 11778602 | B2 | 03 October 2023 |
| | | | | US | 2021-0282140 | A1 | 09 September 2021 |
| | | | | US | 2023-0042026 | A1 | 09 February 2023 |
| | | | | WO | 2020-027537 | A1 | 06 February 2020 |
| KR | 10-2197717 | B1 | 31 December 2020 | KR | 10-2014-0110759 | A | 17 September 2014 |
| CN | 104919745 | B | 06 November 2018 | CN | 104919745 | A | 16 September 2015 |
| | | | | EP | 2938019 | A1 | 28 October 2015 |
| | | | | EP | 2938019 | A4 | 30 December 2015 |
| | | | | EP | 2938019 | B1 | 12 October 2022 |
| | | | | JP | 2016-507186 | A | 07 March 2016 |
| | | | | JP | 6120112 | B2 | 26 April 2017 |
| | | | | KR | 10-1757087 | B1 | 11 July 2017 |
| | | | | KR | 10-2015-0106951 | A | 22 September 2015 |
| | | | | US | 10361822 | B2 | 23 July 2019 |
| | | | | US | 2015-0326354 | A1 | 12 November 2015 |
| | | | | US | 2018-0159667 | A1 | 07 June 2018 |
| | | | | US | 9923673 | B2 | 20 March 2018 |
| | | | | WO | 2014-110790 | A1 | 24 July 2014 |
| US | 2019-0349789 | A1 | 14 November 2019 | CN | 110050425 | A | 23 July 2019 |
| | | | | CN | 110050425 | B | 22 December 2020 |
| | | | | EP | 3557793 | A1 | 23 October 2019 |
| | | | | EP | 3557793 | A4 | 25 December 2019 |
| | | | | EP | 3557793 | B1 | 02 December 2020 |
| | | | | US | 11095393 | B2 | 17 August 2021 |
| | | | | WO | 2018-137204 | A1 | 02 August 2018 |

Form PCT/ISA/210 (patent family annex) (July 2022)